# EUROPEAN PATENT SPECIFICATION

(11) **EP 0 833 992 B1**
(45) Date of publication and mention of the grant of the patent: **13.08.2003**
(21) Application number: 96920743.0
(22) Date of filing: 19.06.1996
(51) Int. Cl.: E04B 1/78, F16L 59/02, F16L 59/14

(54) **A METHOD OF PRODUCING AN ANNULAR INSULATING MINERAL FIBER COVERING**
VERFAHREN ZUM HERSTELLEN EINER RINGFORMIGEN ISOLATIONSVERKLEIDUNG AUS MINERALFESERN
PROCEDE DE PRODUCTION DE COUVERTURE ANNULAIRE EN FIBRE MINERALE ISOLANTE

(30) Priority: 20.06.1995 DK 70395
(43) Date of publication of application: 08.04.1998
(73) Proprietor: Rockwool International A/S, 2640 Hedehusene (DK)
(72) Inventor: CRIDLAND, Ian, DK-2720 Vanloese (DK)
(74) Representative: Nielsen, Henrik Sten
(86) International application number: DK9600268
(87) International publication number: WO97001006

(56) References cited:
- WO-A-94/16162
- DE-A- 3 522 237
- GB-A- 595 134
- US-A- 1 839 200
- US-A- 2 350 996
- US-A- 3 928 105
- US-A- 4 211 131

## Description

The present invention generally relates to the technical field of producing insulating mineral fiber products and in particular annular insulating mineral fiber coverings. Annular insulating mineral fiber coverings may like other mineral fiber products such as mats, plates or slaps be used for thermal insulating, fire insulating, fire protection, noise reduction, noise regulation, growing media etc. Mineral fiber products and mineral fiber coverings are made from mineral fibers which comprise fibers also known as man made viterous fibers (MMVF), such as rockwool fibers, glass fibers, slack wool fibers, etc. More precisely, the present invention relates to a novel technique of producing an annular insulating mineral fiber covering which method exhibit specific advantages as compared to the prior art methods of producing annular mineral fiber coverings and additionally renders it possible to produce annular insulating mineral fiber coverings exhibiting advantageous characteristics as to good thermal-insulating property and mechanical performance, such as modulus of elasticity and strength, low weight, reduced content of bonding agents and high homogeneousity.

Annular insulating mineral fiber coverings have normally hitherto been produced in an elaborated, complex and time consuming process involving producing a non-woven mineral fiber web including uncured bonding agents, introducing the non-woven mineral fiber web including the uncured bonding agents into a casting station in which casting tools are movable from an open position to a closed position in which open position the non-woven mineral fiber web or a segment therefore is received between opposite casting tools which are thereupon moved to a closed position in which the annular configuration of the annular insulating mineral fiber covering to be produced in the casting station is defined between the casting tools, heating the casting tools for curing the previously uncured bonding agents and at the same time casting the annular insulating mineral fiber coverings, separating the casting tools from one another and removing the cast annular insulating mineral fiber covering from the casting station while at the same time cooling the casting tools and thereupon repeating the overall stepwise casting process. As will be readily understood, the process of producing annular insulating mineral fiber coverings involving a casting station is a low output, time consuming and costly process as compared to the continuous and high output processes or methods of producing non-woven mineral fiber webs in an online production plant.

Annular insulating mineral fiber coverings have proven to be most advantageous in numerous applications involving providing heat insulation to cooled or heated tubes or tubings such as cold or hot water supply tubes, coolened distributing tubes in refrigerator or cooling systems through which tubes a cooling is transmitted, and hot water or steam transporting tubes of central heating installations or power plants etc.

Certain refinements of the technique of insulating tubes or tubings have been realized and implemented in the last couple of years as specific refinements of annular insulating mineral fiber coverings have been invented by the staff of the applicant and embodied in numerous products which products have proven to solve or eliminate certain condensed water problems related to prior art annular insulating coverings produced from mineral fiber webs or from foamed materials. Reference is made to applicant's published international patent applications Nos. PCT/DK93/00281 and PCT/DK95/00020, and also the recently allowed US patent application No. 08/182,634 which allowed US patent is hereby incorporated in the present specification by reference.

From GB 595,134 and US 2,350,996 certain techniques of producing or forming pipe coverings are known. According to the techniques or methods described in the above GB and US references, a non-woven mineral fiber web is formed into an ondulated configuration as the mineral fiber web is formed by means of stationary or movable forming or casting elements which form the mineral fiber web into the intentional configuration through compression and shaping by the casting or forming elements.

An object of the present invention is to provide a novel method of producing an annular insulating mineral fiber covering which method renders it possible in an online production process to produce an annular insulating mineral fiber coverings exhibiting advantageous characteristics as to thermal-insulating property and mechanical performance which are equivalent to or even better than prior art cast annular insulating mineral fiber coverings.

A particular feature of the present invention relates to the annular insulating mineral fiber covering according to the present invention and produced in accordance with the method according to the present invention which, as compared to prior art insulating mineral fiber coverings, is of or may be produced in a composite or complex structure fulfilling specific requirements as to mechanical performance and/or thermal insulating properties.

A particular advantage of the present invention relates to the fact that the novel annular insulating mineral fiber covering according to the present invention and produced in accordance with the method according to the present invention is producable in a continuous operating online or high production plant making the method of producing the annular in-sulating mineral fiber covering or the annular insulating mineral fiber covering itself far less costly than the prior art methods and the prior art annular insulating mineral fiber coverings, respectively, still exhibiting advantages as compared to the prior art methods of producing annular insulating mineral fiber coverings and the prior art annular insulating mineral fiber coverings, respectively, in terms of homogegeousity, mechanical performance and thermal-insulating properties.

A further advantage of the present invention relates to the fact that the annular insulating mineral fiber covering produced in accordance with the method of producing annular insulating mineral fiber coverings in accordance with the present invention may be adapted to a specific requirement through the utilization of the highly advantageous mineral fiber web production technique disclosed in applicant's published international patent application No. PCT/DK94/00027, publication No. WO94/16162, in applicant's published international patent application No. PCT/DK00028, publication No. WO94/16163 and in applicant's published international patent application No. PCT/DK94/00029, publication No. WO94/16164, as the method of producing annular insulating mineral fiber coverings according to the present invention may involve employment of any specific mineral fiber web exhibiting specific characteristics or combinations of specific mineral fiber webs for obtaining specific combinations of characteristics as to mechanical properties and/or thermal insulating properties, still rendering it possible to produce the annular insulating mineral fiber coverings in an online production process.

The above object, the above feature and the above advantages together with numerous other objects, features and advantages which will be evident from the below detailed description of the present invention, are in accordance with the teachings of the present invention obtained by a method according to the present invention comprising the following steps:
a) producing a first non-woven mineral fiber web defining a longitudinal and a transversal direction parallel with the first non-woven mineral fiber web and containing an uncured, yet curable bonding agent,
b) moving the first non-woven mineral fiber web in the longitudinal direction,
c) folding the first non-woven mineral fiber web transversely relative to the longitudinal direction and parallel with the transversal direction by decelerating an outer top surface of the first non-woven mineral fiber web relative to an outer lower surface of the first non-woven mineral fiber web thereby generating an upwardly sloping ondulation and thereupon accelerating the outer top surface and decelerating the outer lower surface causing a downwardly sloping ondulation so as to produce an unsupported second non-woven mineral fiber web comprising ondulations including two sets of ondulation peaks extending in opposite directions relative to one another and relative to a plane of separation parallel with the longitudinal and transversal directions, said step c) including a step of curing of the outer surface or the outer surfaces of the second non-woven mineral fiber web by exposing the outer surface or the outer surfaces of the second non-woven mineral fiber web to hot air jets or hot air streams,
d) separating the two sets of ondulation peaks from one another along the plane of separation so as to produce two sets of curved half-coverings,
e) composing two half-coverings of the two sets of curved half-coverings into the annular insulating mineral fiber covering, and
f) curing the second non-woven mineral fiber web prior to separating the two sets of ondulation peaks from one another and from the second non-woven mineral fiber web in step d), curing the two sets of curved half-coverings produced in step d) prior to composing the two half-coverings of the two sets of curved half-coverings into the annular insulating mineral fiber covering in step e) or curing the annular insulating mineral fiber covering produced in step e).

Features a), b), d) and e) constitute prior art technology such as described in American patent No. US 2 350 996. The characterizing features of the present invention, step c), in particular, the final step of curing outer surfaces of the second non-woven mineral fiber web increases the stiffness or self-supporting ability of the second non-woven mineral fiber web, and step f) provides alternative curing steps of curing the second mineral fiber web.

In accordance with the method according to the present invention, the annular insulating mineral fiber covering is produced from sets of ondulations produced from a cured or uncured non-woven mineral fiber web which ondulations are separated from one another and separated from the ondulated cured or uncured non-woven mineral fiber web as the separate ondulations constitute half-coverings which are thereupon combined into a single annular insulating mineral fiber covering comprising two separate half coverings originating or produced from the ondulations of the ondulated cured or uncured non-woven mineral fiber web.

In the present context, the term folding is a generic term to be construed non-limited to a specific operation or folding a non-woven mineral fiber web but rather a generic term comprising any technique or combination of techniques including a single step or plurality of steps altering the overall configuration of the initial non-woven mineral fiber web which is folded from a web configuration defining longitudinal and transversal directions into an ondulated configuration. The folding may as stated comprise a single or a number of steps and may include e.g. longitudinal compression in a single or a plurality of steps and techniques comprising mechanical guiding the non-woven mineral fiber web to be folded and/or longitudinally compressing the initial non-woven mineral fiber web to be folded for providing the ondulations including two sets of ondulation peaks from which ondulations the half-coverings are to be produced in accordance with the teachings of the present invention. According to a particular aspect of the folding technique employed in accordance with the teachings of the present invention, the folding of an unfolded, non-woven mineral fiber web into a folded, non-woven mineral fiber web is established through decellerating the initial unfolded, non-woven mineral fiber web as distinct from any folding technique involving forming dyes or forming elements maintaining the folded non-woven mineral fiber web in the intentional folded configuration as according to the technique according to the present invention the folded, non-woven mineral fiber web is produced as an unsupported, folded non-woven mineral fiber web.

Provided the folding of the first non-woven mineral fiber web is established highly accurately producing an outer and inner surface of the ondulations complying with the intentional outer and inner surfaces, respectively, of the annular insulation mineral fiber covering, the method according to the present invention may readily generate sets of ondulations from which the half coverings and also the annular insulating mineral fiber covering is readily produced.

In most instances, the annular insulating mineral fiber covering is of a coaxial structure and the outer and inner surfaces of the annular insulating mineral fiber covering are consequently of circular cylindrical configurations. For certain requirements and applications, the annular insulating mineral fiber covering may be produced exhibiting non-coaxial inner and outer surfaces and even inner and outer surfaces different from circular cylindrical surfaces such as elliptical cylindrical surfaces, surfaces comprising or composed of segments of surfaces of different geometrical configuration such as segments of surfaces generated from parabolas, hyperbolas etc. It is contemplated that the annular insulating mineral fiber covering may be produced in accordance with the method according to the present invention exhibiting any specific outer and inner surface configuration as the folding in step c) of the first non-woven mineral fiber web may be performed so as to produce the two sets of ondulation peaks of the second non-woven mineral fiber web defining outer curved surfaces of specific configurations and/or the folding in step c) of the first non-woven mineral fiber web being performed so as to produce the two sets of ondulation peaks of the second non-woven mineral fiber web defining inner curved surfaces of specific configurations.

Normally, the annular insulating mineral fiber covering is produced having outer and inner circular cylindrical surfaces, and the specific configurations of the outer curved surfaces of the two sets of ondulation peaks and the specific configurations of the inner curved surfaces of the two sets of ondulation peaks consequently preferably constitute segments of circular cylindrical surfaces.

Provided the ondulations of the second non-woven mineral fiber web produced in step c) does not perfectly comply with the intentional outer and inner surface configurations of the annular insulating mineral fiber covering, the method according to the present invention may further comprise the intermediate step prior to step e) of machining the half-coverings produced in step d) for producing half-coverings having an outer surface of a specific surface configuration, preferably a circular cylindrical surface.

Similarly, the method according to the present invention may comprise the intermediate step prior to step e) of machining said half-coverings produced in accordance with step d) for producing said half-coverings having an inner surface of a specific surface configuration, preferably a circular cylindrical surface.

Alternatively, the inner surface of the half-coverings may be machined in a different configuration such as a configuration having axially extending slits as the method according to the present invention may comprise the intermediate step prior to step e) of machining the half-coverings produced in step d) having an inner surface having axially extending slits extending into the material of the half-coverings. By providing axially extending slits extending into the material of the half coverings, the half-coverings and consequently the annular insulating mineral fiber covering composed of the two half-coverings may accomodate different or varying tube diameter.

The method of producing an annular insulating mineral fiber covering also preferably comprises steps of including an uncured, yet curable bonding agent in the initial or first non-woven mineral fiber web from which the annular insulating mineral fiber covering is produced and the step of curing the uncured, yet curable bonding agent for solidifying the cured product. According to a particular feature of the present invention, the step c) of folding the first non-woven mineral fiber web into the second non-woven mineral fiber web may include the final step included in step c) curing of the outer surface or outer surfaces of the second non-woven mineral fiber web by exposing the outer surface or the outer surfaces of the second non-woven mineral fiber web to hot air jets or hot air streams for producing a cured outer shell or cured outer shells of the outer surface or outer surfaces of the second non-woven mineral fiber web which shell or shells increases the stiffness or self-supporting ability of the second non-woven mineral fiber web which is moved on for further processing in the unsupported state.

According to curing techniques, the method according to the present invention comprises the initial step of producing the non-woven mineral fiber web containing an uncured, yet curable bonding agent, and an intermediate step of curing the second non-woven mineral fiber web prior to separating the two sets of ondulation peaks from one another and from the second non-woven mineral fiber web in step d), an intermediate step of curing the two sets of cured half-coverings produced in step d) prior to composing the two half-coverings of the two sets of curved half-coverings into the annular insulating mineral fiber covering in step e), and a final step of curing the annular insulating mineral fiber covering produced in step e).

The non-woven mineral fiber web from which the second non-woven mineral fiber web is produced through folding for producing the two sets of ondulation peaks may constitute any appropriate non-woven mineral fiber web and further combinations of non-woven mineral fiber webs for providing singular or multilayer structures exhibiting specific characteristics as to mechanical performance and/or thermal insulating properties determined by the initial non-woven mineral fiber web or the initial non-woven mineral fiber webs from which the second non-woven mineral fiber web is produced through folding.

According to a first embodiment of the method according to the present invention, the first non-woven mineral fiber web produced in step a) is produced containing mineral fibers predominantly arranged generally in the longitudinal direction.

According to a second alternative of the method according to the present invention, the first non-woven mineral fiber web produced in step a) is produced containing mineral fibers predominantly arranged generally in the transversal direction.

Provided the first non-woven mineral fiber web constitutes a mineral fiber web containing mineral fibers predominantly arranged generally in the transversal direction. The first non-woven mineral fiber web may advantageously be produced from a basic, non-woven mineral fiber web containing mineral fibers arranged generally in the longitudinal direction by arranging the basic non-woven mineral fiber web in overlapping layers.

The arranging of the basic non-woven mineral fiber web in overlapping layers may be accomplished in any appropriate orientation, preferably, however, the basic non-woven mineral fiber web is arranged in overlapping relation generally in the transversal direction for producing the first non-woven mineral fiber web containing mineral fibers predominantly arranged generally in the transversal direction.

The first, non-woven mineral fiber web from which the annular insulating mineral fiber covering is produced in accordance with the method according to the present invention may alternatively and advantageously be constituted by a differently configurated mineral fiber web covered by applicant's international patent application No. PCT/DK94/00264 and is produced containing mineral fibers predominantly arranged generally transversally relative to one another and generally transversally relative to the longitudinal direction and the transversal direction.

It is to be realized that in the present context, a direction defined as a direction being transversely relative to a specific reference direction defines an angular relationship between the direction in question and the reference direction. More specifically, in the present context, a transverse relationship between any two directions means that an angle is defined between the directions in question, the angle being larger than 0° and smaller than 90°. Thus, in the present context, a transverse direction means a direction different from a longitudinal or transversal direction, i.e. an intermediate direction relative to the longitudinal or transversal direction constituting the reference direction in question.

According to the presently preferred method of producing the first non-woven mineral fiber web containing mineral fibers predominantly arranged generally transversally relative to one another and generally transversally to the longitudinal direction and the transversal direction, the first non-woven mineral fiber web is produced from a basic non-woven mineral fiber web containing mineral fibers predominantly arranged generally in the longitudinal direction by arranging segments of the basic, non-woven mineral fiber web in partly mutually overlapping relationship and transversely relative to the longitudinal direction and the transversal direction so as to produce a segmented non-woven mineral fiber web containing mineral fibers predominantly arranged generally transversely relative to the longitudinal direction and the transversal direction and generally transversely relative to one another, and folding the segmented, non-woven mineral fiber web transversely relative to the longitudinal direction and parallel with the transversal direction so as to produce the non-woven mineral fiber web containing mineral fibers predominantly arranged generally transversely relative to one another and generally transversely relative to the longitudinal direction and the transversal direction.

As stated above, the first non-woven mineral fiber web from which the annular insulating mineral fiber covering is produced in accordance with the method according to the present invention may constitute a single mineral fiber web or be composed of a number of individual non-woven mineral fiber webs arranged in a multilayer configuration. The individual non-woven mineral fiber webs of the multilayer configuration may further be of identical structure or different structure and/or the individual non-woven mineral fiber webs may be of identical density or different densities and the individual non-woven mineral fiber webs may be produced in accordance with any of the above described methods of producing non-woven mineral fiber webs containing mineral fibers predominantly arranged along specific directions and consequently exhibiting specific characteristics as to mechanical properties and thermal-insulating properties.

In order to modify or improve specific characteristics of the final product, i.e. the annular insulating mineral fiber covering, the first non-woven mineral fiber web from which the annular insulating mineral fiber covering is produced in accordance with the method of the present invention may be exposed to specific treatment such as homogenisation and compression treatments. According to alternative embodiments of the method according to the present invention, the method further comprises the additional step of height compressing the first non-woven mineral fiber web produced in step a), additionally or alternatively comprises the additional step of longitudinally compressing the first non-woven mineral fiber web produced in step a) and additionally or alternatively comprises the additional step of transversally compressing the non-woven mineral fiber web produced in step a).

It has been realized that the additional step of height compressing the first non-woven mineral fiber web prior to folding the first non-woven mineral fiber web for producing the second non-woven mineral fiber web makes the first non-woven mineral fiber web more easily bendable or foldable to a substantial extent eliminating the risk that the folding of the first non-woven mineral fiber web may crack during the step of folding the first non-woven mineral fiber web. The height compression of the first non-woven mineral fiber web to be folded in step c) so to speak breaks the "back bone" of the initial or first mineral fiber web and increases the flexibility of the first non-woven mineral fiber web thus making the first non-woven mineral fiber web more easily bendable or foldable.

According to a further alternative embodiment of the method according to the present invention, a rim part of the first non-woven mineral fiber web produced in step a) may be transversally compressed in an additional step for improving the mechanical strength of the corresponding rim part of the two sets of curved half-coverings and consequently the annular insulating mineral fiber covering as a transverse compression of the rim part improves the mechanical integrity of the part of the final product originating from the rim part.

Apart from combining identical or different mineral fiber webs into a composite first non-woven mineral fiber web from which the annular insulating mineral fiber covering is produced in accordance with a method according to the present invention, the annular insulating covering may further be produced integrally comprising coverings or coatings as the method according to the present invention may further comprise the intermediate step of applying a surface coating on one or both sides of the first non-woven mineral fiber web produced in step a) prior to folding the first non-woven mineral fiber web in step c). The coating may constitute a foil or covering such as a vlies covering or an aluminum foil, and the foil or coating may depending on whether or not the first non-woven mineral fiber web is cured or uncured as the coating is applied to one or both sides on the first non-woven mineral fiber web constitute a heat undurable or a heat durable foil or covering. Examples of heat uncurable foils or coverings are plastics foils such as woven or non-woven fibrouss plastics foils, continuous plastics foils e.g. PE, PVC or PP plastics foils or textile fibrous foil, e.g. cotton or wood fiber based foils.

According to an alternative embodiment of the method according to the present invention, the method further comprises the step of applying an exterior coating to the annular insulating mineral fiber covering which exterior coating may constitute a heat undurable or a heat durable coating such as a plastics foil or an aluminum foil, respectively, or combinations of the above described coverings or foils. Further alternatively, a paint coating may be applied to the exterior surface of the annular insulating mineral fiber covering.

The method according to the present invention of producing annular insulating mineral fiber coverings may be utilized for producing annular insulating mineral fiber coverings to be used within the fields thermal insulation, fire insulation, fire protection, noise reduction, noise regulation, growing media etc. Dependent on the actual application of the annular insulating mineral fiber covering produced in accordance with the method according to the present invention, certain additives may be added to the product prior to the curing of the bonding agent or after the curing of the bonding agent which additives may comprise water-repellant agents or surface active agents. Methods of producing mineral fiber webs including water repellant agents and surface active agents are disclosed in Danish patent application No. 0845/94 which was made available to the public on 22 July 1994. The method according to the present invention of producing annular insulating mineral fiber coverings may further comprise the technique described in applicant's international patent application, application No. PCT/DK94/00406, publication No. WO 95/14135.

Provided the annular insulating mineral fiber covering produced in accordance with the method according to the present invention is to be used as a growing media, the annular insulating covering preferably includes a surface active agent as one of the half-coverings or preferably both half-coverings together constituting the annular insulating mineral fiber covering includes a surface active agent providing a water suction effect which may advantageously be utilized for promoting growth of plants. Provided the annular insulating mineral fiber covering produced in accordance with the method according to the present invention is used as a growing media, the half coverings are used for circumferentially.encircling the plant such as the root of a tree. The annular insulating mineral fiber covering including a surface active agent may further be used as a drainage covering or alternatively provided a water repellant is added to the annular insulating mineral fiber covering, the water repellant characteristics may advantageously be utilized in certain high humidity or water exposure applications provided thermal insulation, fire insulation, fire protection, noise reduction, noice regulation etc. without ruining the insulating properties of the annular insulating mineral fiber covering through water suction or exposure to steam or water.

Within the technical field of providing growing media, an annular insulating mineral fiber covering produced in accordance with the method according to the present invention may also be utilized in a cylindrical flower pot in which the annular insulating mineral fiber covering including a surface active agent is re-ceived circumferentially encircling the root of a flower or plant which is grown in the flower pot. The annular insulating mineral fiber covering to be used in a flower pot has of course to have a somewhat reduced longitudinal extension as compared to annular insulating mineral fiber coverings to be used within the thermal insulation, fire insulation, fire protection, noise reduction, noise regulation etc. technical fields as the annular covering to be used as a growth media within a flower pot should have a length, i.e. a longitudinal extention somewhat smaller than the height of the cylindrical flower pot. It is to be realized that provided the annular insulating mineral fiber covering is to be used as a growth media circumferentially encircling the root of a plant or flower, the inner surface of the half-coverings of the annular insulating mineral fiber covering need not be thoroughfully machined but rather define a fairly soft, irregular inner surface of the annular insulating covering allowing the inner surface of the annular insulating covering to accomodate the irregular configuration of the root of the tree or plant.

The present invention will now be further described with reference to the drawings, in which
Fig. 1 is a schematical and perspective view illustrating a first production step of producing a basic or primary mineral fiber web from a mineral fiber forming melt,
Fig. 2 is a schematic and perspective view illustrating a first production step of producing an alternative mineral fiber web as compared to the basic or primary mineral fiber web shown in Fig. 1 from a mineral fiber forming melt,
Fig. 3 is a schematic and perspective view illustrating a production step of compacting the mineral fiber web,
Fig. 4 is a schematic and perspective view illustrating a production step of separating a surface layer of the mineral fiber web produced in accordance with the production steps shown in Fig. 1 or 2 and optionally compacted in accordance with the production step shown in Fig. 3.
Fig. 5 is a schematic and perspective view illustrating a production plant for the production of a further alternative mineral fiber web,
Fig. 6 is a schematic and perspective view illustrating in greater details a production step of the production of the mineral fiber web also illustrated in Fig. 5,
Fig. 7 is a schematic and perspective view similar to the view of Fig. 6 illustrating an additional production step of the production of the mineral-insulating fiber web shown in Figs. 5 and 6,
Fig. 8 is a schematic and perspective view illustrating a production station for producing an ondulated mineral insulating web to be further processed for producing annular insulating mineral fiber coverings in accordance with the teachings of the present invention,
Figs. 9 and 10 are schematic and perspective views similar to the view of Fig. 8 illustrating different ondulated mineral fiber webs including mineral fibers predominantly arranged in orientations differing from the orientation of the mineral fibers contained in the ondulated mineral fiber web shown in Fig. 8 and from one another,
Figs. 11-13 are schematic and perspective views similar to the views of Figs. 8-10 illustrating techniques of producing composite, ondulated mineral fiber webs from which composite annular insulated mineral fiber coverings are produced in accordance with the teachings of the present invention,
Fig. 14 is a schematic and sectional view of an alternative embodiment of a production station for producing an ondulated mineral fiber web from which annular insulating mineral fiber coverings are produced in accordance with the teachings of the present invention,
Fig. 15 is a schematic and sectional view illustrating an ondulated mineral fiber web cut into individual mineral fiber half-shells by cutting through the ondulated mineral fiber web along a plane of symmetry of the ondulated mineral fiber web,
Fig. 16 is a schematic and perspective view of a production station for curing the ondulated mineral fiber web produced in accordance with the techniques illustrated in Figs. 8-15 and for separating the cured, ondulated mineral fiber web into separate half-shells to be further processed for producing annular insulating mineral fiber half-coverings in accordance with the present invention,
Fig. 17 is a schematic view of a first embodiment of processing tools for processing the mineral fiber half-shells produced as shown in Figs. 15 and 16 into annular insulating mineral fiber half-coverings,
Figs. 18 and 19 are schematic and perspective views of alternative embodiments of processing tools for processing the mineral fiber half-shells produced as shown in Figs. 15 and 16 into annular insulating mineral fiber half-coverings according to the present invention,
Fig. 20 is a schematic and perspective view of an annular insulating mineral fiber half-covering produced in accordance with the present invention, and
Figs. 21-23 are schematic, partly sectional and perspective views of customized annular insulating mineral fiber coverings including two separate annular insulating mineral fiber half-coverings and exterior coverings.

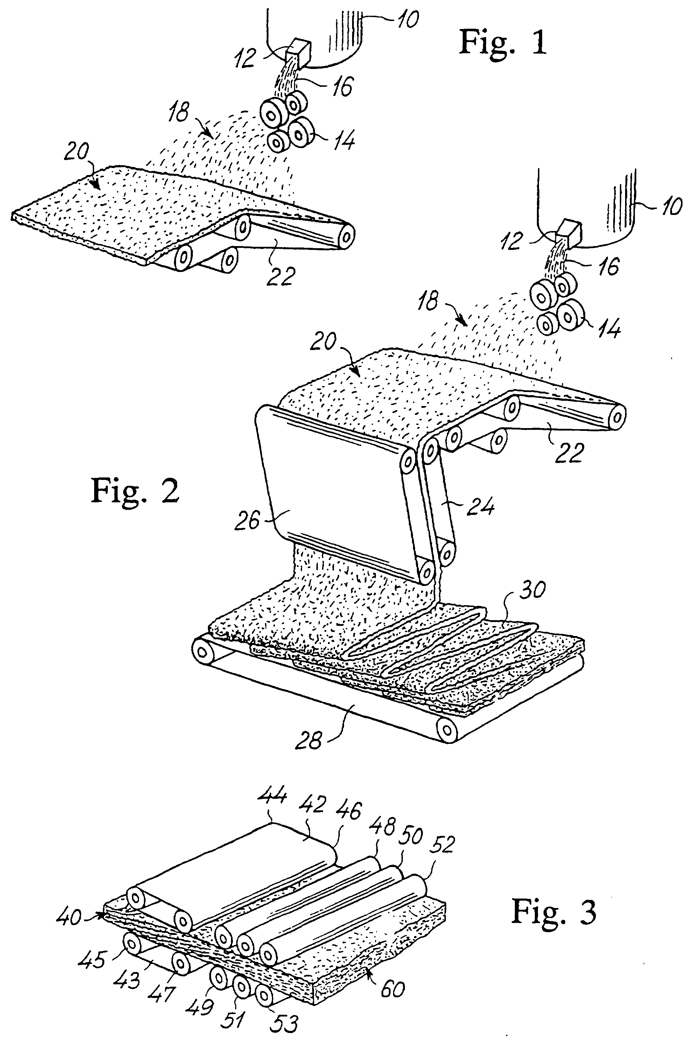

In Fig. 1, a first step of producing a basic mineral fiber web is disclosed. The first step involves the formation of mineral fibers from a mineral fiber forming melt which is produced in a furnace 10 and which is supplied from a spout 12 of the furnace 10 to a total of four rapidly rotating spinning-wheels 14 to which the mineral fiber forming melt is supplied as a mineral fiber forming melt stream 16. As the mineral fiber forming melt stream 16 is supplied to the spinning-wheels 14 in a radial direction relative thereto, a gas stream is simultaneously supplied to the rapidly rotating spinning-wheels 14 in the axial direction thereof causing the formation of individual mineral fibers or bunches or tufts of mineral fibers which are expelled or sprayed from the rapidly rotating spinning-wheels 14 as indicated by the reference numeral 18. The gas stream may constitute a so-called temperature treatment gas stream, normally a cooling gas stream. The mineral fiber spray 18 is collected on a continuously operated first conveyer belt 22 forming a basic or primary mineral fiber web 20. A heat-curable bonding agent is also added to the primary mineral fiber web 20 either directly to the primary mineral fiber web 20 or at the stage of expelling the mineral fibers from the spinning-wheels 14, i.e. at the stage of forming the individual mineral fibers. The first conveyer belt 22 is, as is evident from Fig. 1, composed of two conveyer belt sections. A first conveyer belt section which is sloping relative to the horizontal direction and relative to a second substantially horizontal conveyer belt section. The first section constitutes a collector section, whereas the second section constitutes a transport section.

It is to be realized that the basic or primary mineral fiber web 20 produced in the first production step illustrated in Fig. 1 contains mineral fibers arranged generally or predominantly in the direction of transportation determined by the first conveyer belt 22, i.e. in the longitudinal direction of the first conveyer belt 22 and consequently in the overall longitudinal direction of the basic or primary mineral fiber insulating web 20 collected on the first conveyer belt 22.

In Fig. 2, a first step of producing an alternative mineral fiber web as compared to the basic or primary mineral fiber web shown in Fig. 1 is disclosed. The step shown in Fig. 2 basically comprises the first step shown in Fig. 1, i.e. the step of producing the basic or primary mineral fiber web 20 from the mineral fiber forming melt stream 16 generated by means of the spout 12 of the furnace 10 and by means of the rapidly rotating spinning wheels 14 from which the mineral fiber spray 18 is expelled, whereupon the mineral fiber spray 18 is collected on the collector section of the first conveyer belt 22 generating the basic or primary mineral fiber web containing mineral fibers generally or predominantly arranged in the longitudinal direction of the basic or primary mineral fiber web 20. The first section of the first conveyer belt 22 constitutes as stated above a collector section, whereas the second section of the conveyor belt 22 constitutes a transport section by means of which the basic or primary mineral fiber web 20 is transferred to a second and a third continuously operated conveyer belt designated the reference numeral 24 and 26, respectively, which are operated in synchronism with the first conveyer belt 22 sandwiching the basic or primary mineral fiber web 20 between two adjacent surfaces of the second and third conveyer belts 24 and 26, respectively.

The second and third conveyer belts 24 and 26, respectively, communicate with a fourth conveyer belt 28 which constitutes a collector conveyer belt on which a secondary mineral fiber web 30 is collected as the second and third conveyer belts 24 and 26, respectively, are swung across the upper surface of the fourth conveyer belt 28 in the transversal direction relative to the fourth conveyer belt 28. The secondary mineral fiber web 30 is consequently produced by arranging the primary mineral fiber web 20 in overlapping relation generally in the transversal direction of the fourth conveyer belt 28.

By producing the secondary mineral fiber web 30 from the primary mineral fiber web 20 as disclosed in Fig. 2, a more homogeneous secondary mineral fiber web 30 is produced as compared to the less homogeneous primary mineral fiber web 20.

Furthermore, the overall orientation of the mineral fibers of the secondary mineral fiber web 30 is altered as compared to the overall orientation of the mineral fibers of the basic or primary mineral fiber web 20. Thus, as stated above the overall orientation of the mineral fibers of the basic or primary mineral fiber web 20 is parallel with the longitudinal direction of the web 20 and the direction of transportation of the first conveyer belt 22. Contrary to the basic or primary mineral fiber web 20, the overall orientation of the mineral fibers of the secondary mineral fiber web 30 is substantially perpendicular and transversal relative to the longitudinal direction of the secondary mineral fiber web 30 and the direction of transportation of the fourth conveyer belt 28.

In Fig. 3, a station for compacting and homogenizing an input mineral fiber web 40 is shown, which station serves the purpose of compacting and homogenizing the input mineral fiber web 40 for producing an output mineral fiber web 60, which output mineral fiber web 60 is more compact and more homogeneous as compared to the input mineral fiber web 40. The input mineral fiber web 40 may constitute the basic or primary mineral fiber web 20 produced in the station shown in Fig. 1 or alternatively and preferably constitute the secondary mineral fiber web 30 produced in the station shown in Fig. 2.

The compacting station comprises two sections. The first section comprises two conveyer belts 42 and 43, which are arranged at the upper side surface and the lower side surface, respectively, of the mineral fiber web 40 and which are journalled on rollers 44, 46 and 45, 47, respectively. The first section basically constitutes a section in which the mineral fiber web 40 input to the section is exposed to a height compression, causing a reduction of the overall height of the mineral fiber web and a compacting of the mineral fiber web. The conveyer belts 42 and 43 are consequently arranged in a manner, in which they slope from an input end at the left-hand side of Fig. 3, at which input end the mineral fiber web 40 is input to the first section, towards an output end, from which the height-compressed mineral fiber web is delivered to the second section of the compacting station.

The second section of the compacting station comprises three sets of rollers 48 and 49, 50 and 51, and 52 and 53. The rollers 48, 50 and 52 are arranged at the upper side surface of the mineral fiber web, whereas the rollers 49, 51 and 52 are arranged at the lower side surface of the mineral fiber web. The second section of the compacting station provides a longitudinal compression of the mineral fiber web, which longitudinal compression produces a homogenization of the mineral fiber web, as the mineral fibers of the mineral fiber web are caused to be rearranged as compared to the initial structure into a more homogeneous structure. The three sets of rollers 48 and 49, 50 and 51, and 52 and 53 of the second section are rotated at the same rotational speed, which is, however, lower than the rotational speed of the rollers 44, 46, 45, 47 propelling the conveyer belts 42 and 43, respectively, of the first section, causing the longitudinal compression of the mineral fiber web. The height-compressed and longitudinally compressed mineral fiber web is output from the compacting station shown in Fig. 3, designated the reference numeral 60.

It is to be realized that the combined height-and-longitudinal-compression compacting station shown in Fig. 3 may be modified by the omission of one of the two sections, i.e. the first section constituting the height-compression section, or alternatively the second section constituting the longitudinal-compression section. By the omission of one of the two sections of the compacting station shown in Fig. 3, a compacting section performing a single compacting or compression operation is provided, such as a height-compressing station or alternatively a longitudinally-compressing station. Although the height-compressing section has been described including conveyer belts, and the longitudinally-compressing section has been described including rollers, both sections may be implemented by means of belts or rollers. Also, the height-compressing section may be implemented by means of rollers, and the longitudinally-compressing section may be implemented by means of conveyer belts.

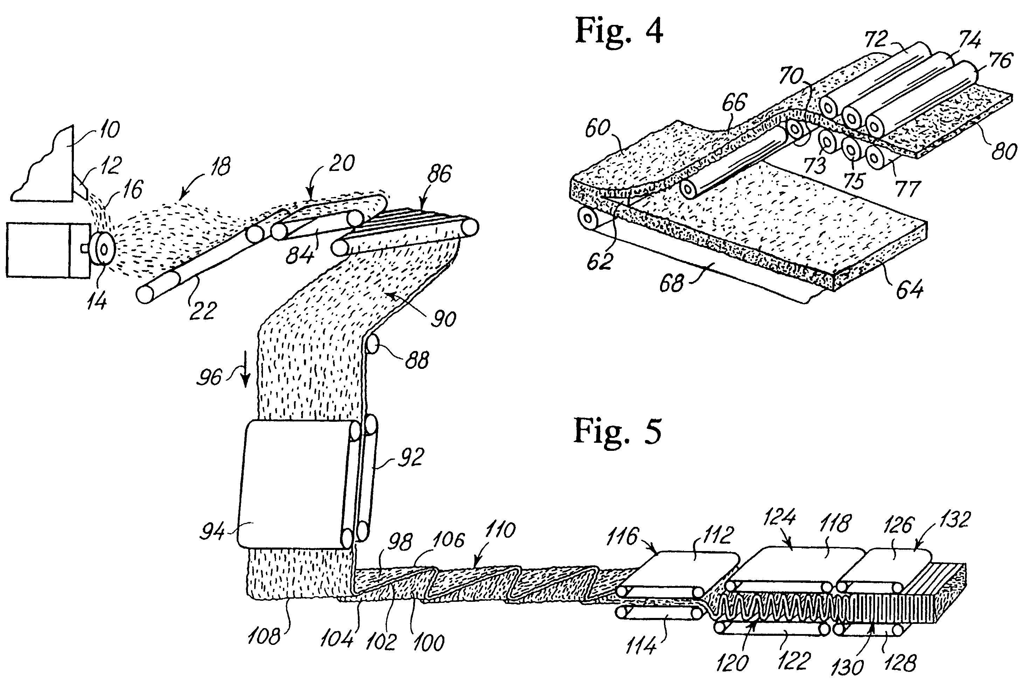

In Fig. 4, a further production station is shown, in which station a surface layer 66 is separated from the mineral fiber web 60, providing a remaining part of the mineral fiber web 60, the remaining part being designated the reference numeral 64. The mineral fiber web 60 to be processed in the station shown in Fig. 4 may constitute the output mineral fiber web 60 shown in Fig. 3, or alternatively the basic or primary mineral fiber web 20 produced in the station shown in Fig. 1. The mineral fiber web 60 to be processed in the station shown in Fig. 4 may alternatively constitute the secondary mineral fiber web 30 produced in the station shown in Fig. 2, or alternatively, a mineral fiber web of a structure to be described below with reference to Figs. 5-7. The separation of the surface layer 66 from the remaining part 64 of the mineral fiber web is accomplished by means of a cutting tool 62 as the remaining part 64 of the mineral fiber web 60 is supported and transported by means of a conveyer belt 68. The cutting tool 62 may be constituted by a stationary cutting tool or knife or alternatively be constituted by a transversely reciprocating cutting tool or knife. The surface layer 66 separated from the mineral fiber web is derived from the path of travel of the remaining part 64 of the mineral fiber web by means of a conveyer belt 70 and is transferred from the conveyer belt 70 to three sets of rollers comprising a first set of rollers 72 and 73, a second set of rollers 74 and 75, and a third set of rollers 76 and 77, which three sets of rollers together constitute a compacting or compressing section similar to the second section of the compacting station described above with reference to Fig. 3. From the compacting or compressing section including the three sets of rollers 72, 73; 74, 75; and 76, 77, respectively, a compacted or compressed mineral fiber web 80 is supplied.

In the upper left hand part of Fig. 5, first station for carrying out a first step of producing an alternative mineral fiber web is disclosed which station is identical to the station described above with reference to Fig. 1 and includes the furnace 10, from the spout 12 of which a mineral fiber forming melt stream 16 is supplied to the spinning wheel or wheels 14 from which the mineral fibers are expelled as indicated by the reference numeral 18. The station also includes the continuously operated first conveyor belt 22 on which the basic or primary mineral fiber web 20 is collected and a second conveyor belt 84 to which the basic or primary mineral fiber web 20 is transferred from the first conveyor belt 22.

From the second conveyor belt 84, the primary mineral fiber web 20 is further transferred to a second station designated the reference numeral 86 in its entirety. The station 86 constitutes a station in which the overall direction of transportation of the basic or primary mineral fiber web 20 is transformed from the longitudinal direction defined by the first and second conveyor belts 22 and 84, respectively, to a longitudinal direction determined by a mineral fiber web 90.

The mineral fiber web 90 is a mineral fiber web originating from the directly collected primary mineral fiber web 20 and consequently contains mineral fibers predominantly arranged or orientated in the longitudinal direction of the mineral fiber web 90. Thus, the mineral fiber web 90 defines a first longitudinal direction and a first transversal direction, the first longitudinal direction being the direction along which the mineral fibers of the mineral fiber web 90 is predominantly arranged or orientated.

The mineral fiber web 90 is transferred from the station 86 by means of conveyor belts, not shown in Fig. 1, to a roller 88 which serves the purpose of shifting the direction of transportation of the mineral fiber web 90 from a substantially horizontal direction to a substantially vertical direction as indicated by an arrow 96 for the transfer of the mineral fiber web 90 to a further station in which the mineral fiber web 90 is transformed into a segmentary mineral fiber web 110 by arranging segments of the mineral fiber web 90 in partly mutually overlapping relationship and transversely relative to the longitudinal and the transversal directions of the segmentary mineral fiber web 110. The transformation of the mineral fiber web 90 into the segmentary mineral fiber web 110 is accomplished by means of two pendulum or oscillating conveyor belts 92 and 94 having upper input ends to which the mineral fiber web 90 is input and lower horizontally oscillating output ends from which the mineral fiber web 90 is output constituting segments which are arranged in the above-described partly overlapping relationship for the formation of the segmentary mineral fiber web 110.

In Fig. 5, two segments designated the reference numerals 98 and 100, respectively, are shown constituting segments of which the segmentary mineral fiber web 110 is composed. The segment 100 is defined by opposite folds 104 and 106 connecting the segment 100 to a previously produced segment and to the segment 98, respectively. The segment 98 is further defined by a fold 108 through which the segment is connected to the mineral fiber web 90 extending substantially vertically to the pendulum conveyors 92 and 94. The segmentary mineral fiber web 110 is moved from a position below the pendulum conveyor belts 92 and 94 to the right in Fig. 5 towards a further processing station 116 comprising two height compressing or compacting conveyor belts 112 and 114 which serve the purpose of compacting and homogenizing the segmentary mineral fiber web 110. The station 116 constitutes a station similar to the station described above with reference to Fig. 3. In Fig. 5, the reference numeral 102 designates a front edge of the segment 98 which front edge constitutes a boundary line between the segments 98 and 100 of the segmentary mineral fiber web 110.

It is to be realized that the segmentary mineral fiber web 110 is composed of segments originating from the mineral fiber web 90 in which the mineral fibers are predominantly arranged or orientated along the longitudinal direction of the mineral fiber web 90 and the mineral fibers of the segmentary mineral fiber web 110 is consequently predominantly arranged or orientated in directions determined by the position of the individual segments of the segmentary mineral fiber web 110 such as the segments 98 and 100. Thus, the segments 98 and 100 contain mineral fibers which are predominantly arranged tranversely relative to the longitudinal direction of the segmentary mineral fiber web 110 and transversely relative to one another. The transverse directions along which the mineral fibers of the segmentary mineral fiber web 110 are arranged is basically defined by the ratio between the speed of transportation of the mineral fiber web 90 and the speed of transportation of the segmentary mineral fiber web 110, i.e. the ratio between the speed of transportation of the conveyor belt by means of which the mineral fiber web 90 is fed to the pendulum conveyors 92 and 94 and the speed of transportation of the conveyor belt by means of which the segmentary mineral fiber web is transferred from the pendulum conveyor belts 92 and 94 towards the station 116. Through the alternation of the ration between the above described speeds of transportation of the mineral fiber 90 and the segmentary mineral fiber web 110, the partly mutually overlapping relationship of the segments of the segmentary mineral fiber web 110 is adjustable and also the overall orientation of the mineral fibers of the segmentary mineral fiber web 110 along the transverse directions along which the mineral fibers of the segmentary mineral fiber web 110 are predominantly arranged or orientated.

The conveyor belts 112 and 114 of the height compressing or compacting station 116 are of a wedge-shaped configuration providing a compression of the segmentary mineral fiber web 110 at least at the output end of the compacting station 116 and are operated so as to cause a vertical pendulum motion of the segmentary mineral fiber web 110 at the output end of the compacting station 116. Consequently, the compacting station 116 causes an overall homogenization through rearrangement of mineral fibers producing a homogene mineral fiber web which is output from the compacting station 116 in a vertical pendulum motion to a further processing station 124 in which the mineral fiber web is further processed for the formation of a folded mineral fiber web.

In the processing station 124, the mineral fiber web output from the compacting station 116 is folded for the formation of a mineral fiber web in which the mineral fiber web output from the compacting station 116 is folded vertically and consequently transversally or perpendicularly relative to the longitudinal direction of the mineral fiber web and parallel with the transversal direction of the mineral fiber web. The folded mineral fiber web is produced by means of two conveyor belts 118 and 122 sandwiching the mineral fiber web and providing a further deceleration of the rate of transportation of the mineral fiber web into the compacting station and consequently a vertical folding of the mineral fiber web.

From the station 124, the vertically folded mineral fiber web is input to a further station 132 comprising two conveyor belts 126 and 128 which further decelerates the speed of transportation of the folded mineral fiber web 120 for the formation of a compacted and homogenized folded mineral fiber web 130. The mineral fiber web 130 constitutes a final mineral fiber product which similar to the mineral fiber webs 20, 30, 60, 64, 80 may be processed alone or in combination in an on-line production plant as will be described below for the production of annular insulating mineral fiber coverings.

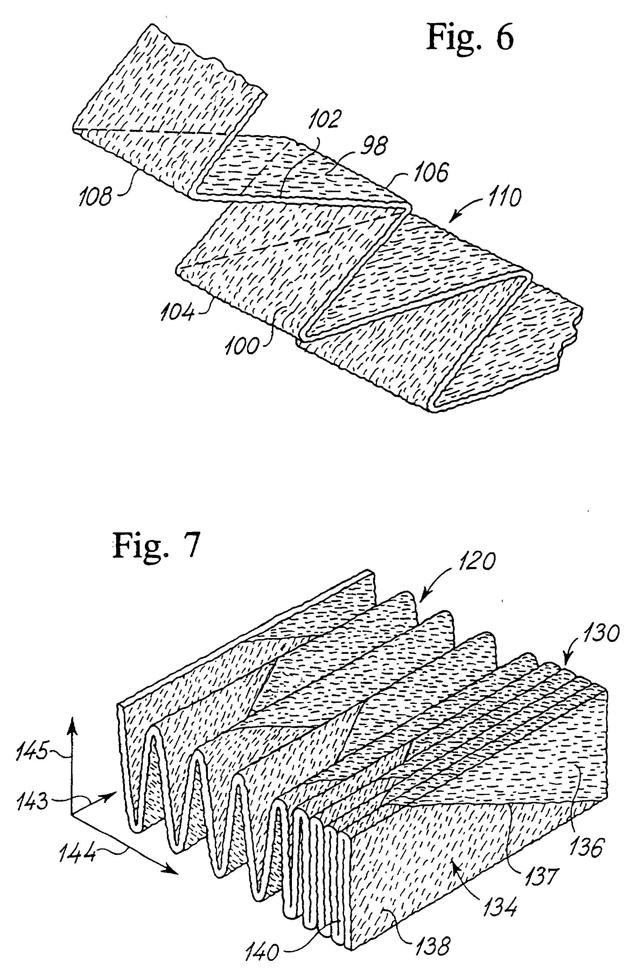

In Fig. 6, the segmentary mineral fiber web 110 is shown in greater details illustrating the segments 98 and 100 and further the edges 106 and 108. Fig. 6 further illustrates in greater details the predominant arrangement or orientation of the mineral fibers of the individual segments of which the segmentary mineral fiber web 110 is composed.

In Fig. 7, the folded mineral fiber web 120 and further the compacted and homogenized folded mineral fiber web 130 are shown illustrating the structure of the webs. In the lower right hand part of Fig. 7, two lamellae or segments of the mineral fiber web 70 are shown designated the reference numerals 134 and 140. The lamella or segment 134 further discloses two subsegments 136 and 138 which are interconnected through a line of separation designated the reference numeral 137. The line 137 originates from an edge such as the edge 102 shown in Figs. 5 and 6 of the arrangement of the segments such as the segments 98 and 100 of which the segmentary mineral fiber web 110 are composed in the partly mutually overlapping relationship in which the segments are positioned. Thus, in Fig. 7, the subsegments 136 and 138 contain mineral fibers which are predominantly arranged or orientated in transverse directions relative to the longitudinal and transversal directions of the mineral fiber web 130 and further relative to one another. In Fig. 7, the reference numeral 144 designates an arrow representing the longitudinal direction of the mineral fiber web 140. Similarly, the reference numerals 143 and 145 designate arrows representing the transversal direction and the elevational direction, respectively, of the mineral fiber web 130.

Fig. 7 further illustrates a specific characteristic of the mineral fiber web 130 as the line 137 separating the subsegments 136 and 138 from one another are shifted from the segment 138 to the segment 140 and further to the adjacent segments basically determined by the ratio of overlapping ratio of the segmentary mineral fiber web 110 such as the segments 98 and 100 and the height of the foldings of the folded and compacted mineral fiber web 130 such as the segments 134 and 140. It is to be realized that the indication of the predominant orientation of the mineral fibers of the mineral fiber webs described above is somewhat exaggerated for illustrative purposes exclusively.

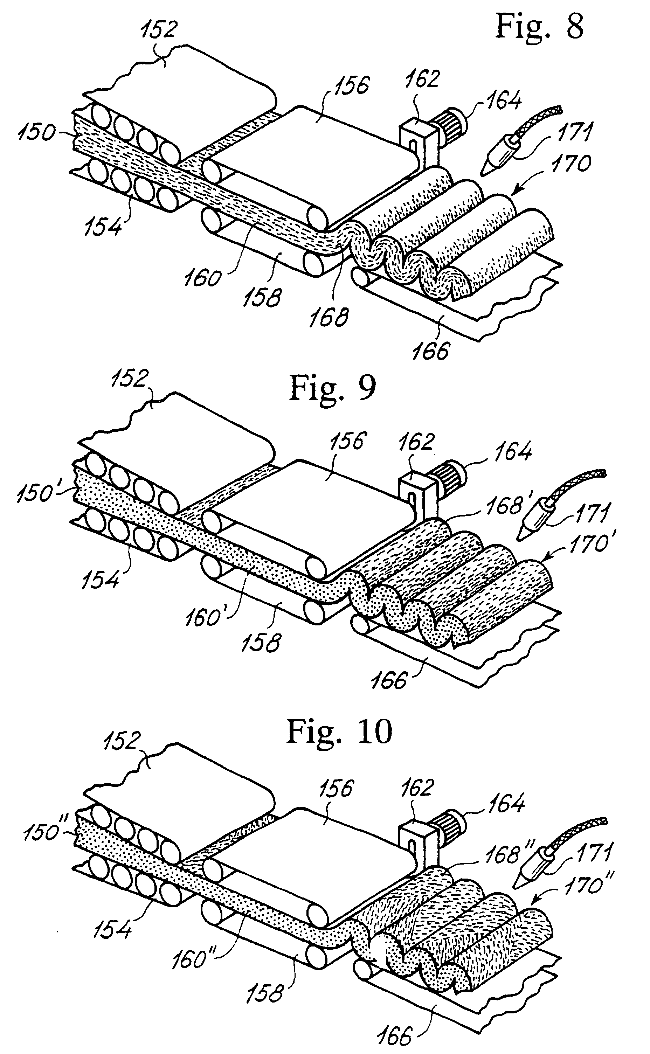

In Fig. 8, a production station is shown in which an initial mineral fiber web is further processed in accordance with the teachings of the present invention for producing an ondulated mineral fiber web from which annular insulating mineral fiber half-coverings is produced as will be described below. The production station shown i Fig. 8 basically comprises two mineral fiber web sandwiching conveyor belts 152 and 154 which are positioned on opposite sides, i.e. above and below, respectively, a mineral fiber insulating web 150 which is to be processed for producing an ondulated mineral fiber web designated the reference numeral 170.

The mineral fiber insulating web sandwiching conveyor belts 152 and 154 produce as is evident from Fig. 8 a moderate compression of the mineral fiber web 150 input to the production station and delivers a compressed mineral fiber web 160 to a further set of mineral fiber web sandwiching conveyor belts 156 and 158 which are positioned above and below, respectively, the compressed mineral fiber web 160. The conveyor belts 156 and 158 serve, however, the main purpose of producing the ondulated mineral fiber web 170. The conveyor belts 156 and 158 define an input end and an output end for receiving the compressed mineral fiber web 160 from the mineral fiber web sandwiching conveyor belts 152 and 154 and supplying the ondulating mineral fiber web 170 to a further conveyor belt 166, respectively.

The rollers on which the conveyor belts 156 and 158 are journalled at the input end of the conveyor belts 156 and 158, are stationary relative to the adjacent rollers on which the conveyor belts 152 and 154 are journalled, whereas the rollers on which the conveyor belts 156 and 158 are journalled at the output end of the conveyor belts 156 and 158 are vertically movable relative to a vertical stand 162 as the motion of the rollers relative to the stand 162 is produced by means of motor 164. As the motor 164 is energized, the rollers at the output end of the conveyor belts 156 and 158 are raised or lowered producing a vertical reciprocating motion of the output end of the conveyor belts 156 and 158 which vertically reciprocating motion produces ondulations of the compressed mineral fiber 160 which ondulations together combine into the ondulated mineral fiber web 170. The reference numeral 171 designates a nozzle from which a hot air stream or hot air jet is expelled and directed towards the upper surface of the undulated mineral fiber web 170 for causing a surface curing of the undulated mineral fiber web 170 increasing the stiffness and self-supporting capability of the ondulated mineral fiber web 170 which is moved on by means of the conveyor belt 166 in an unsupported state. A similar solidifying means e.g. a hot air generating nozzle, a perforated tube or the like may similarly be positioned below the ondulated mineral fiber web 170 for partly solidifying the outer lower surface of the ondulated mineral fiber web 170 produced in the production station shown in fig. 8 and also in the production stations to be described below with reference to figs. 9, 10 and 13.

An ondulation produced as the rollers journalled in the vertical stand 162 are lowered from a top position towards a bottom position is designated the reference numeral 168. The ondulated mineral fiber web 170 produced through the vertical reciprocating motion of the output end of the conveyor belts 156 and 158 is received on the conveyor belt 166 which is operated at a lower speed as compared to the speed of transportation of the conveyor belts 152, 154, 156 and 158. The the conveyor belts 156 and 158 may also be operated at a somewhat lower speed as compared to the speed of transportation of the conveyor belt 152 and 154 for producing a moderate longitudinal compression of the compressed mineral fiber web 160 input to the vertically reciprocating and mineral fiber web sandwiching conveyor belts 156 and 158.

The ratio of speed of transportation between the conveyor belts 156, 158 and the conveyor belt 166 and the stroke of the vertically reciprocating motion of the output end of the conveyor belts 156 and 158 define the peak of the ondulations of the ondulated mineral fiber web 170 and also the width or wave length of the ondulations of the ondulated mineral fiber web. It is also to be realized that the contour of the outer surface of the ondulations of the ondulated mineral fiber web 170 may be influenced through the operation of the conveyor belt 166 and the motor 164 as in particular the motor 164 may be operated in a time varying manner producing a non-continuous vertical reciprocating motion of the conveyor belts 156 and 158 which non-continuous operation influences the generation of the individual ondulations such as the ondulation 168 of the ondulated mineral fiber web 170.

The motor 164 may, thus, be controlled in a specific time-varying manner for producing a specific exterior contour of the ondulations such as the ondulation 168 of the ondulated mineral fiber web 170. For most purposes, it is desirable to have an outer contour of the ondulations of the ondulated mineral fiber web 170 of a substantially circular cylindrical configuration as the annular insulating mineral fiber half-coverings to be produced from the ondulated mineral fiber 170 are normally and preferably to exhibit an outer circular cylindrical surface. Alternative exterior contours may be accomplished through varying the operation of the motor 164 and/or the speed of the conveyor belt 166.

The production station shown in fig. 8 in which the initial mineral fiber web is processed for producing an ondulated mineral fiber web may be modified e.g. by omitting the motor 64 and maintaining the conveyor belt 156 and 158 stationary while varying the speed of the conveyor belt 156 relative to the speed of the conveyor belt 158 in a time varying manner providing a periodic deceleration of the top surface of the compressed mineral fiber web 160 through decelerating the conveyor belt 156 relative to the conveyor belt 158 causing the generation of an upwardly sloping ondulation such as the sloping 158 shown in fig. 8 and thereupon an acceleration of the conveyor belt 156 and at the same time a deceleration of the conveyor belt 158 for decelerating the lower surface of the compressed mineral fiber web 160 for causing the mineral fiber web delivered from the output end of the sandwiching conveyor belt 156 and 158 to shift downwardly producing the ondulations of the ondulated mineral fiber web 170. Also through this periodic acceleration and deceleration of the top and lower surfaces of the compressed mineral fiber web 150, the speed of transportation of the conveyor belt 166 may be kept stationary or varied or altered in conjunction with the alteration of the varying speed of the conveyor belt 156 and the varying speed of the conveyor belt 158. In the above described alternative embodiment including accelerating and decelerating sandwiching conveyor belts 156 and 158, the longitudinal extension of the conveyor belts may be modified and the conveyor belts may further alternatively be substituted by rollers or guiding plates or combinations of belts, rollers and/or guiding plates serving the purpose of producing the ondulated mineral fiber web 170 through altering the speed of transportation of the top surface of the compressed mineral fiber web 150 relative to the bottom surface thereof and vice versa.

The mineral fiber web 150 input to the mineral fiber web sandwiching conveyor belts 152 and 154 shown in Fig. 8 is a mineral fiber web including mineral fibers predominantly arranged in the longitudinal direction of the mineral fiber web 150. Thus, the mineral fiber web 150 may constitute a web similar to the directly collected and optionally compacted or compressed mineral fiber web 20 described above with reference to Fig. 3.

The technique of producing an ondulated mineral fiber web to be further processed for producing annular insulating mineral fiber half-coverings may be employed in connection with any mineral fiber web including mineral fiber webs including mineral fibers of any arbitrary predominant orientation or composed of mineral fiber web layers and optionally surface or interlayered sheets rendering it possible to produce annular insulating mineral fiber coverings exhibiting specific predominant mineral fiber orientation and structural composition fulfilling specific requirements as to strength, flexibility and/or elasticity and thermal insulating properties.

In Fig. 9, the same production station as shown in Fig. 8 is illustrated and processing an alternative mineral fiber web 150' including mineral fibers predominantly arranged transversally relative to the longitudinal direction of the mineral fiber web 150', i.e. constituting a web similar to the web 30 described above with reference to Fig. 2 and optionally compressed as described above with reference to Fig. 3. The input mineral fiber web 150' is sandwiched and compressed by means of the conveyor belts 152 and 154 producing a compressed mineral fiber web 160' including mineral fibers predominantly arranged transversally relative to the longitudinal direction of the mineral fiber web. The reference numerals 158' and 170' designate an ondulation and an ondulated mineral fiber web including mineral fibers predominantly arranged transversally relative to the direction of transportation of the ondulated mineral fiber web 170'. Thus, the ondulation 168' and the ondulated mineral fiber web 170' correspond to the ondulation 168 and the ondulated mineral fiber web 170 described above with reference to Fig. 8. It is, however, to be realized that the ondulated mineral fiber web 170 described above with reference to Fig. 8 include mineral fibers predominantly arranged tangentially relative to the ondulations of the ondulated mineral fiber web, whereas the ondulated mineral fiber web 170' include mineral fibers predominantly arranged axially relative to the ondulations of the ondulated mineral fiber web 170'.

The above described mineral fiber-insulated web produced as described with reference to Figs. 5-7 may also be processed in the production station shown in Figs. 8 and 9 as illustrated in Fig. 10 in which the reference numerals 150", 160", 168" and 170" designate elements corresponding to the elements 150, 160, 168 and 170, respectively, described above with reference to Fig. 8, however, including mineral fibers predominantly arranged transversally to one another and transversally relative to the longitudinal and transversal directions of the mineral fiber web.

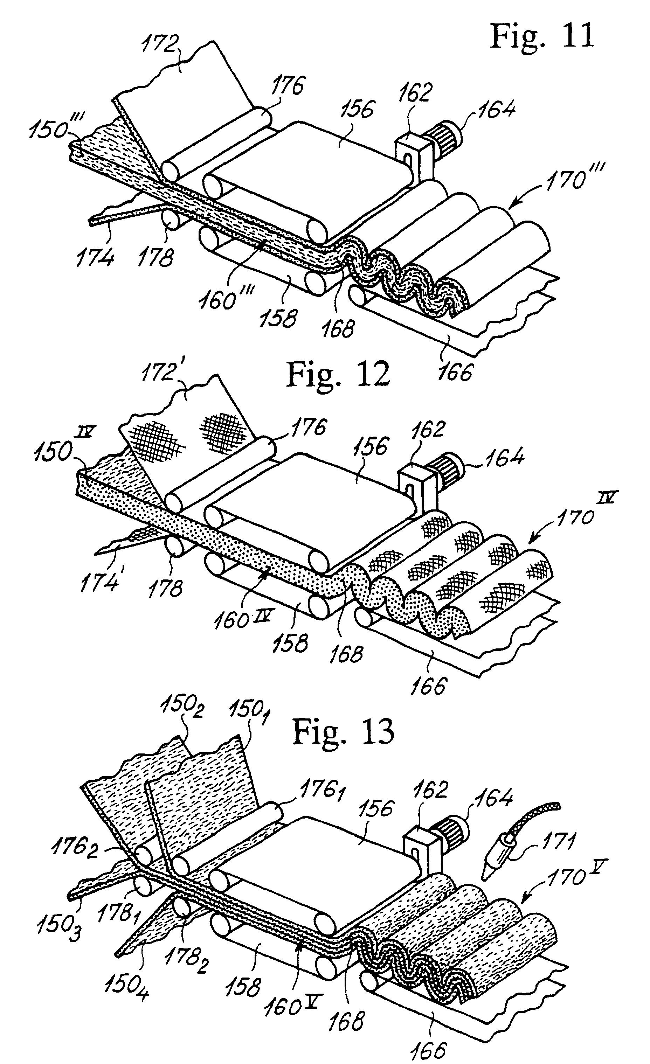

In Fig. 11, a technique of producing a composite ondulated mineral fiber web is illustrated according to which technique, a central mineral fiber web 150''' is sandwiched between two opposite mineral fiber surface layers 172 and 174. The central mineral fiber web 150''' may constitute any of the above described mineral fiber webs 20, 30, 60, 64, or 130, and the mineral fiber surface layers or webs 172 and 174 may be produced in accordance with a technique described above with reference to Fig. 4 or alternatively constitute mineral fiber webs produced in a different production plant and constitute mineral fiber webs of any of the above described configurations or structures. Preferably, the mineral-insulating surface layers or webs 172 and 174 are of identical structure, yet for certain applications, the webs 172 and 174 may be of different structure.

The production station shown in Fig. 11 basically corresponds to the production station described above with reference to Figs. 8, 9 and 10, however, the production station shown in Fig. 11 is modified as compared to the production station shown in Figs. 8, 9 and 10 in that the sandwiching conveyor belts 152 and 154 are omitted and replaced by two rollers 176 and 178 which serve the purpose of contacting the mineral fiber surface layers or webs 172 and 174 to the central mineral fiber web 150'''. Dependent on whether or not the webs 150''', 172 and 174 are cured as will be discussed in greater details below or uncured and also dependent on the content of curing agent present and uncured in the webs 150''', 172 and 174, the mineral fiber surface webs 172 and 174 may be contacted directly to the central mineral fiber web 150''' or applied and contacted with the central mineral fiber web 150''' by means of an adhesive or glue, e.g. the curing agent used in the previous production stations such as the stations described above with reference to Figs. 1, 2 and 5 for producing the basic or primary mineral fiber web 20 described above with reference to Fig. 1.

After the application of the mineral fiber surface webs or layers 172 and 174 to the central mineral fiber web 150''', a composite mineral fiber web 160''' is produced which is further processed by means of the sandwiching and vertically reciprocating conveyor belts 156 and 158 as described above with reference to Fig. 8 for producing an ondulated, composite mineral fiber web 170'''.

The mineral fiber surface webs or layers 172 and 174 may as is disclosed in Fig. 12 be substituted by foil layers or layers of sheets 172' and 174' such as foil from sheets produced from organic or nonorganic materials, e.g. textile foils, plastics foils constituted by continuous plastics foils or woven or non-woven foils, metal foils such as aluminum foils or combinations thereof. The surface sheets or foils 172' and 174' are applied to a central mineral fiber web 150^{IV} by means of the rollers 176 and 178 described above and applied o the central mineral fiber web 150^{IV} by means of heat or an adhesive serving the purpose of adhering the surface layers or foils 172' and 174' relative to the central mineral fiber web 150^{IV}. The central mineral fiber web 150^{IV} may like the above described central mineral fiber web 150''' described above with reference to Fig. 11 constitute any of the above described mineral fiber webs or a composite mineral fiber web such as a web similar to the web 160''' described above with reference to Fig. 11 or a composite mineral fiber web of a structure to be described below with reference to Fig. 12. After the application of the surface layers or foils 172' and 174' to the central mineral fiber web 150^{IV}, a surface coated mineral fiber web 160^{IV} is produced which is further processed for producing an ondulated, surface coated mineral fiber web 170^{IV} in accordance with the technique described above with reference to Fig. 8. As stated above, the technique of producing an ondulated mineral fiber web as described above with reference to Fig. 8 may be accomplished involving single or composite mineral fiber webs, e.g. as described above with reference to Fig. 11.

In Fig. 13, a further advantageous technique of producing ondulated composite mineral fiber insulating webs is disclosed according to which technique a plurality of insulating mineral fiber insulating webs 150₁, 150₂, 150₃ and 150₄ of identical or different structure or configuration are combined into a composite mineral fiber web 160^{V}. The individual mineral fiber webs 150₁, 150₂, 150₃ and 150₄ are combined through the application of rollers and optionally adhesive or glue applicators which rollers are designated the reference numerals 176₁, 176₂, 178₁ and 178₂. As is evident from Fig. 13, the rollers 176₂ and 178₁ are used for combining the central mineral fiber webs 150₂ and 150₃ together, and the rollers 176₁ and 178₂ are used in accordance with a technique similar to the technique described above with reference to Fig. 11 for applying the outer or surface layers or webs 150₁ and 150₄ to the composite mineral fiber web including the central mineral fiber webs 150₂ and 150₃. As indicated above, the mineral fiber webs 150₁, 150₂, 150₃ and 150₄ may be combined by the application of adhesives or glues dependent on the nature of the mineral fiber webs 150₁, 150₂, 150₃ and 150₄ and in particular dependent on whether or not the mineral fiber webs 150₁, 150₂, 150₃, 150₄ are cured or uncured and consequently contain no uncured curing agent or adhesive or contain uncured curing agent or adhesive.

The composite mineral fiber web 160^{V} is in accordance with the technique described above for producing ondulated mineral fiber webs processed by means of the conveyor belts 156 and 158 for producing an ondulated, composite mineral fiber web 170^{V}. It is to be understood that the composite mineral fiber web 150^{V} may be further modified by the application of surface or ingetral foils or layers similar to the foils or layers 172' and 174' described above with reference to Fig. 12 and may be of unsymmetrical or preferably, symmetrical structure as the outer mineral fiber webs such as the webs 150₁ and 150₄ are of identical structure and the central mineral mineral fiber webs 150₂ and 150₃ are also of identical structure or configuration or at least of structures producing a symmetrical final product constituted by the ondulated, composite mineral fiber web 170^{V}.

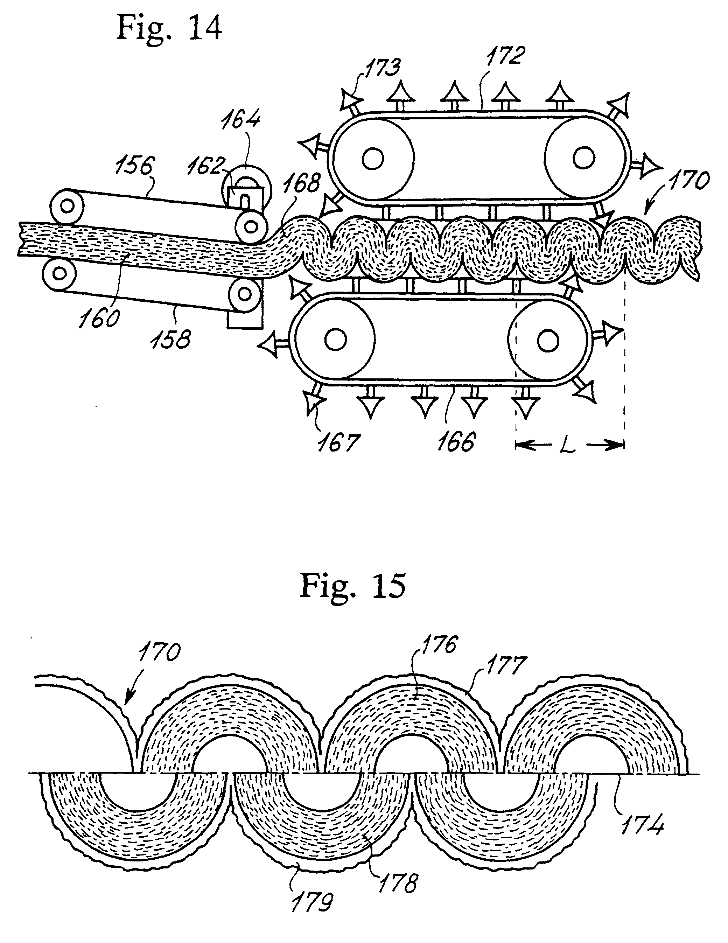

The technique of producing an ondulated mineral fiber web constituting a cured or uncured mineral fiber web to be further processed for producing annular insulating mineral fiber half-coverings as will be described in greater details below may be accomplished in any appropriate manner including the application of any means adapted to and capable of producing ondulated mineral fiber webs. Thus, the above described sandwiching and vertically reciprocating belts 156 and 158 may be substituted by any other appropriate ondulation generating means such as composite sets of rollers or guiding plates etc. or combinations of elements of the above described kind. Dependent on the actual properties of the ondulated mineral fiber web produced through the ondulation technique, e.g. as described above with reference to Fig. 8, and in particular the thickness and stiffness of the mineral fiber web constituting the initial web from which the ondulated minerl fiber web is produced, e.g. the web 160 or any other webs 160', 160", 160''', 160^{IV} and 160^{V}, the technique may further be improved by applying additional ondulation generating or promoting means such as ondulation supporting or guiding means illustrated in Fig. 14.

In Fig. 14, the mineral fiber web 160 is disclosed sandwiched between the conveyor belts 156 and 158 described above with reference to Fig. 8 along with the vertical stand 162 and the motor 164. The conveyor belt 166 which as described above is operated at a lower speed as compared to the speed of transportation of the conveyor belts 156 and 158 is also shown together with a further conveyor belt 172 which is positioned above the ondulated mineral fiber web 170 and opposite to the conveyor belt 166 which supports the ondulated mineral fiber web 170 from below.

The conveyor belts 166 and 172 are further provided with a plurality of ondulation supporting elements 167 and 173, respectively, which extend from the outer surfaces of the conveyor belt 166 and 172 and are positioned spaced apart defining the half wave length of the ondulations of the ondulated mineral fiber web 170the wave length being designated the reference 1 in Fig. 14. The ondulation supporting elements 167 and 173 are further offset a quarter of the wave length of the ondulations of the ondulated mineral fiber, insulating web 170 relative to one another and constitute elements extending perpendicularly relative to the direction of transportation of the conveyor belts 166 and 72. The ondulation supporting elements 167 and 173 preferably constitute through-going transversally extending profile elements which as will be evident from Fig. 14 serve the purpose of supporting the ondulations produced by means of the conveyor belts 156 and 158 and preventing the ondulations already produced from being influenced by the ondulation to be produced such as the ondulation 168 and, thus, the main purpose of ensuring that ondulations of the specific and intentional configuration and width are produced.

The ondulated mineral fiber web produced in accordance with the technique described above with reference to Figs. 8-14 or any other similar ondulation producing technique, is in accordance with the teachnings of the present invention further processed for producing annular insulating mineral fiber half-shells as the ondulated mineral fiber web such as the web 170' shown in Fig. 9 and also shown in Fig. 15 is separated into a plurality of half-shells along a plane of symmetry of the ondulated mineral fiber web 170' which plane is indicated by a line 174 shown in Fig. 15. Provided the ondulated mineral fiber web defines outer surfaces of contours which are in conformity with the intentional outer contours of the annular insulating mineral fiber half-coverings to be produced from the half-shells shown in Fig. 15, no additional processing need to be performed. However, in most instances the ondulations of the ondulated mineral fiber webs to be further processed as will be described below, are of a slightly imperfect outer configuration as the outer surfaces of the ondulations of the ondulated mineral fiber-insulated web such as the web 170' shown in Fig. 15 are not entirely in conformity with the desired or intentional outer configuration of the annular mineral fiber to be produced from the ondulated mineral fiber web such as the half-shells shown in Fig. 15.

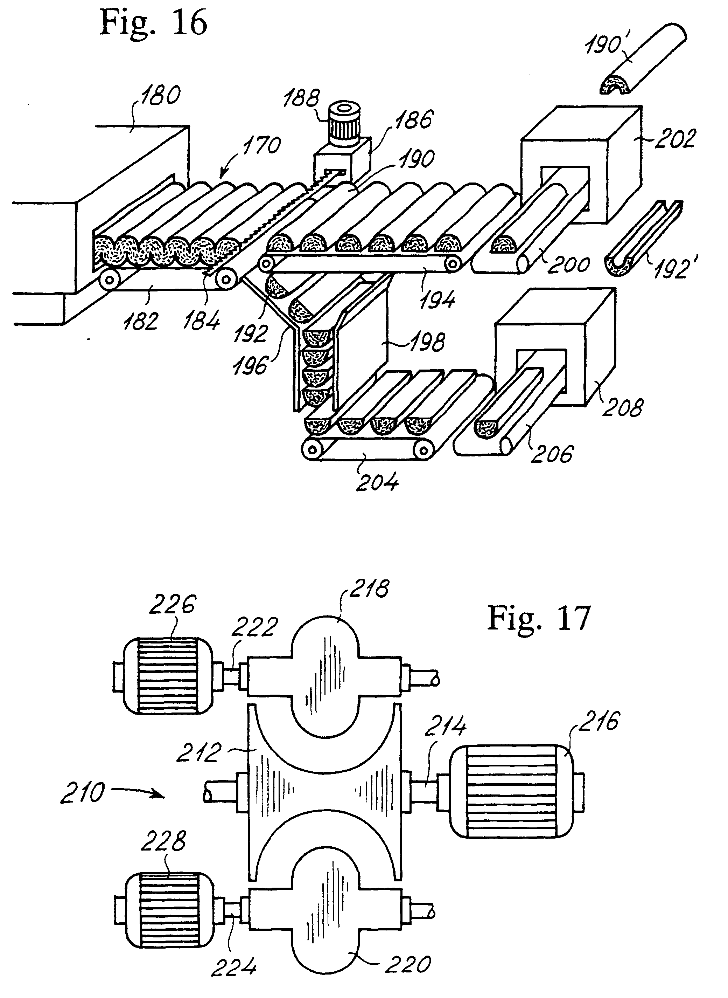

Under these circumstances, the half-shells are to be further processed by mechanical processing or machining as an outer surface layer such as surface layers 177 and 179 are to be separated from the central bodies of the half-shells which central bodies are designated the reference numerals 176 and 178 and present, after the mechanical processing or machining, outer circular cylindrical surfaces of perfect conformity with the intentional outer surfaces of the annular mineral fiber coverings to be produced from the half-shells shown in Fig. 15. It is to be realized that the inner contour of the ondulations of the ondulated mineral fiber web such as the web 170' shown in Fig. 15 may also differ from the intentional configuration and consequently need to be mechanically processed or machined as will be described in greater details below with reference to Figs. 17-19.

In Fig. 16, a further production station is shown in which the separation of the ondulated mineral fiber web produced in accordance with the technique described above with reference to Figs. 8-14 or any equivalent technique is separated into individual half-shells as schematically indicated in Fig. 15. In Fig. 16, the ondulated mineral fiber web 170 is shown which ondulated mineral fiber web may be substituted by any of the ondulated mineral fiber webs 170', 170'', 170''', 170^{IV} and 170^{V} described above with reference to Figs. 9-13 or any other composite or single ondulated mineral fiber web. In Fig. 16, the web 170 is output from a curing oven 180 and received on a supporting conveyor belt 182. By means of the conveyor belt 182 and any additional conveying or transportating means included in the curing oven or provided prior to the curing oven 180, the ondulating mineral fiber web 170 is presented to a separation station in which a horizontally reciprocating cutter blade 184 cuts into the ondulated mineral fiber web 170 and produces separate top and bottom half-shells 190 and 192, respectively. The horizontally reciprocating cutter blade 184 is constituted by a saw blade which is mounted in a support structure 186 and caused to reciprocate through the activation of a motor 188. The top half-shells 190 are received and supported on a conveyor belt 194 whereas the bottom half-shells 192 slide along a guiding plate structure 196 and is received in a trough-shaped receptor which is defined between a vertical plate part of the plate struture 196 and a further vertical plate 198. From the receptor, the bottom half-shells 192 are transferred to a conveyor belt 204. As is evident from Fig. 16, the top half-shells 190 are supported and conveyed on the conveyor belt 194 supported on the plane surface of the half-shells produced through the separation of the half-shells 190 from the ondulated mineral fiber web 170 whereas the bottom half-shells 192 are turned upside down relative to the top half-shells 190 as the bottom half-shells are supported on the conveyor belt 204 on the outer cylindrical surface of the half-shells.

From the conveyor belts 194 and 204, the top half-shells and the bottom half-shells 190 and 192, respectively, are transferred to further transportation means constituted by conveyor belts 200 and 206, respectively, by means of which the top and bottom half-shells 190 and 192, respectively, are introduced into two processing stations 202 and 208, respectively, in which the half-shells 190 and 192, respectively, are machined for producing annular mineral fiber insulating half-coverings 190' and 192' by separating excess material from the half-shells 190 and 192 by means of cutter or similar machining elements to be described below with reference to Figs. 17-19.

In Fig. 17, the reference numeral 210 designates a cutter tool assembly by means of which the above described half-shells 190 and 192 are processed in a single processing station for producing the annular insulating mineral fiber half-coverings 190' and 192', respectively. The cutter tool assembly 210 centrally comprises a cutter blade 212 which is mounted on an output shaft 214 of a motor 216. The cutter blade 212 includes concave circular blade under cuts serving the purpose of producing the circular cylindrical outer surfaces of the annular insulating mineral fiber half-coverings 190' and 192' as the cutter blade 212 is rotated as the motor 216 is energized. For machining the inner surfaces of the half-shells 190 and 192 for producing the circular cylindrical inner surfaces of the annular insulating mineral fiber half-converings 190' and 192', two additional cutter blades 218 and 220 are provided which are mounted on output shafts 222 and 224, respectively, of two motors 226 and 228, respectively. The cutter 218 and the cutter blade 220 are provided for machining the inner surface of the top half-shell 190 and the bottom half-shell 192, respectively, and are of identical configuration as the annular insulating mineral fiber half-coverings 190', 190" are of symmetrical configurations. The cutters 218, 212 and 220 may be rotated in one of the same rotational direction or alternatively the cutters 218 and 220 may be operated in one of the same rotational direction whereas the cutter 212 is rotated in the opposite rotational direction.

The matching or processing of the half-shells 190 and 192 may of course be accomplished in numerous ways as the top and bottom shells 190 and 192 may be processed in separate stations such as the stations 202 and 208 shown in Fig. 16, in an integral station such as the station comprising the cutter tool assembly 210 shown in Fig. 17 or simply be machined in a single station after the top or bottom half-shells 190 and 192, respectively, have been turned upside down and combined with the bottom and top half-shells 192 and 190, respectively. After the turning upside down of either of the top or bottom half-shells and combining the top and bottom half-shells together, a single processing station may be used for processing the top and bottom half-shells one after the other.

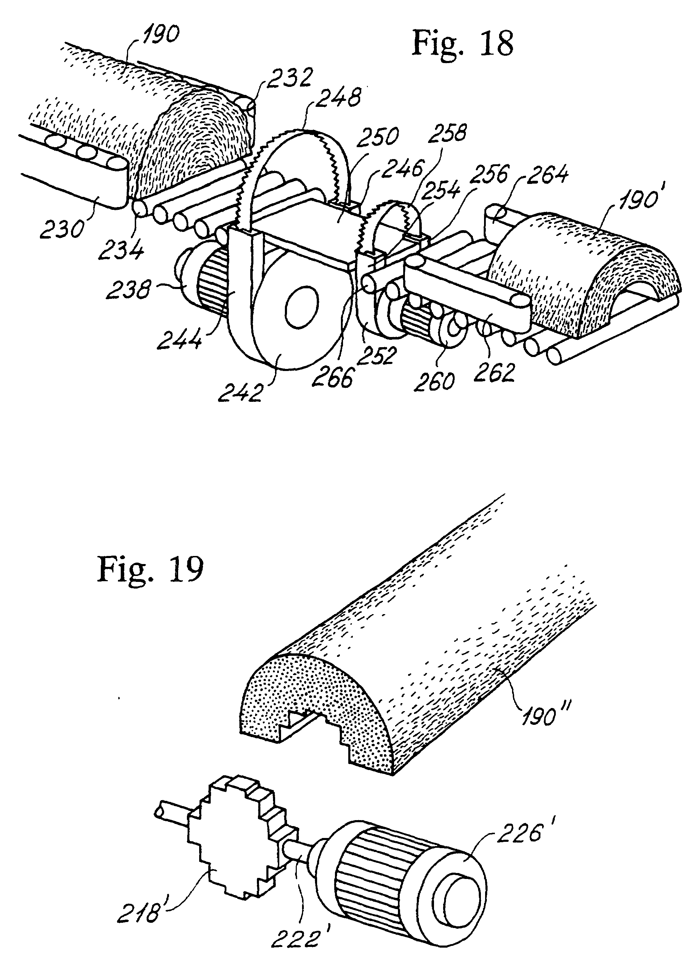

In Fig. 18, a single processing station which may be used for processing the top half-shells 190, exclusively, or used for processing top half-shells 190 and also bottom half-shells 192 after the bottom half-shells 192 have been turned upside down, is shown which processing station differs from the processing station shown in Fig. 17 in that closed loop saw blades are used for producing or machining the outer and inner circular cylindrical surfaces of the half-shells for producing the annular insulating mineral fiber half-coverings such as the half-covering 190' which is partly shown in the right hand part of Fig. 18.

The input half-shell 190 is guided and conveyed by means of vertical conveyor belts 230 and 232 and supported on a plurality of rollers 234. The half-shell 190 is initially brought into contact with a first closed loop saw blade 248 which is partly housed within a cylindrical housing 242 having upwardly protruding housing parts 244 and 246 from which the closed loop saw blade 248 extends in a semicircular curve. Within the cylindrical housing 242, a propellor wheel is provided which is journalled on an output shaft of a motor 238 and by means of which the closed loop saw blade 248 is caused to move in the semicircular loop between the two housing parts 244 and 246. As the half-shell 290 is forced through the closed loop saw blade 248, the half-shell is received on a plate 250 which serves the purpose of supporting the lower side surface of the half-shell 190 as the half-shell is introduced into a further cutter serving the purpose of producing the inner circular cylindrical surface of the annular insulating mineral fiber half-covering 190'.

The further cutter comprises components similar to the components 238, 242, 244, 246 and 248 of the cutter described above, thus, the cutter for producing the inner cylindrical surface of the annular insulating mineral fiber half-covering 190' comprise a cylindrical housing 292 from which housing parts 254 and 256 protrude upwardly in which housing a closed loop saw blade 258 is journalled which closed loop saw blade is powered by a motor 260. After the outer and inner surfaces of the half-shell 190 has been machined by means of the closed loop saw blade 248 and 258 which may be operated in the same direction or in opposite directions, the annular insulating mineral fiber half-covering 190 is received on a plurality of rollers 266 and conveyed or transported from the cutting blades 248 and 258 by means of vertically extending conveyor belts 262 and 264.

In Fig. 19, an alternative configuration of the cutter blade 218 shown in Fig. 18 is illustrated designated the reference numeral 218' which cutter blade is mounted on an output shaft 222' of a motor 226'. The cutter blade 218' differs from the cutter blade 218 shown in Fig. 17 in two aspects. Firstly, the cutter blade 218' is of a configuration allowing the cutter blade 218' to be used for processing or machining the inner surfaces of a top half-shell 190 and at the same time a bottom half-shell 192 which is positioned symmetrically relative to and opposite to the half-shell 190 before the half-shells 190 and 192 is introduced into contact with the cutter blade 218'. Secondly, the rim part of the cutter part 218' differs from the semicircular configuration of the cutter blade 218 and also the cutter blade 220 as the cutter blade 218' defines a jacked outer rim part by means of which an indented inner surface is produced in the top and bottom half-shells 190 and 192, respectively, which is illustrated in the upper right hand part of Fig. 19 in which a modified annular insulating mineral fiber half-covering 190" is shown exhibiting the indented inner surface produced by means of the jacked cutter blade 218' and a circular cylindrical outer surface which may be produced by means of the blade 248 or alternatively a cutter blade similar to the cutter blade 212 shown in Fig. 17.

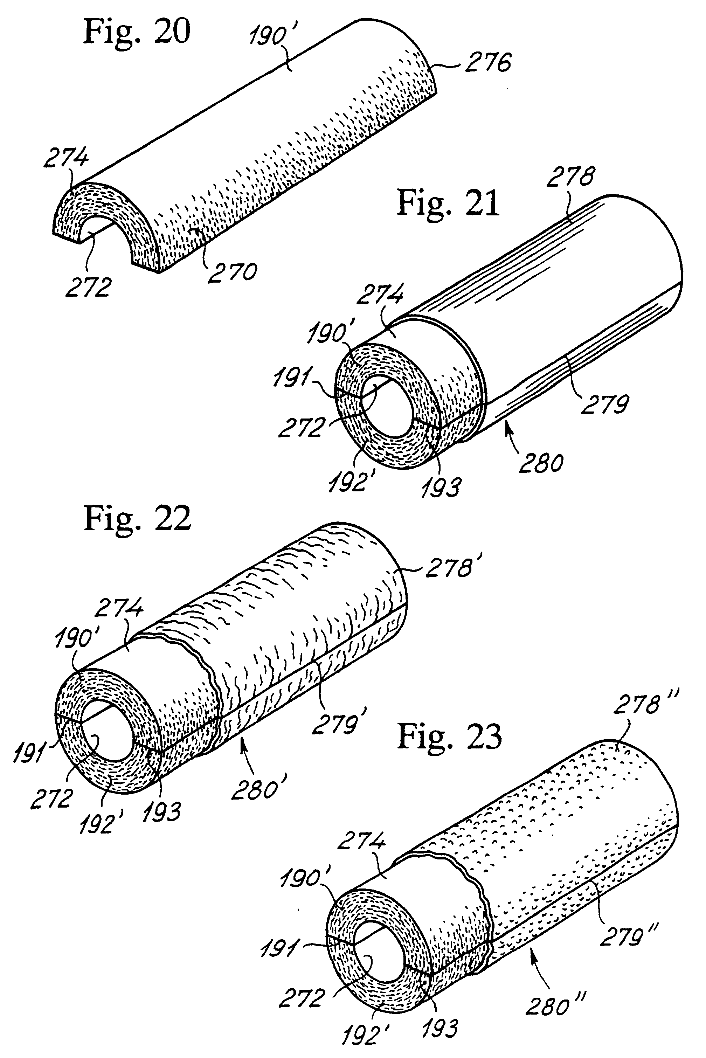

In Fig. 20, the annular insulating mineral fiber half-covering 190' is shown in greater details defining the outer circular cylindrical surface 270, the inner circular cylindrical surface 272 and opposite end faces 274 and 276. The end faces 274 and 276 may be produced by the end faces presented by the original mineral fiber insulating web from which the half-shell 190 and the half-covering 190' is produced such as the end faces of the web 150 shown in Fig. 8 which is ondulated into the ondulated mineral fiber insulated web 170 shown in Fig. 8 and further cured and machined e.g. as disclosed in Fig. 16. For certain applications, the end faces of the mineral fiber web such as the web 150 from which the half-covering 190' is produced may be compacted edgewise in order to increase the mechanical integrity and strength of the corresponding end part of the final half-covering 190', e.g. by transversally compacting the rim part or rim parts of the initial web or webs from which the ondulated insulating mineral fiber web is produced, i.e. prior to the ondulation of the mineral fiber web such as the web 150 shown in Fig. 8. Dependent on the actual dimensions of the half-covering 190' and the finish of the end parts of the half-shells 190 from which the half-covering 190' is produced, the end faces 274 may be produced by the corresponding end faces of the original half-shells 190 or alternatively be produced by machining such as cutting the end faces of the half-shells 190 prior to or after the machining of the inner and outer circular cylindrical side surfaces 272 and 270, respectively, as described above with reference to Figs. 16-18.

The half-covering 190' and a corresponding lower part half-covering 192' may be combined into numerous annular heat insulating assemblies such as the heat insulating assemblies described in published international patent application, application No. PCT/DK93/00281, publication No. WO94/05947, corresponding to US patent application No. 08/182,634 to which reference is made and which is hereby incorporated in the present specification by reference. Thus, according to alternative embodiments of the annular insulating mineral fiber covering according to the present invention constituting a central part of a heat insulating assembly, the inner and/or the outer surfaces of the annular heat insulating assembly may be covered by foils or sheets providing specific heat insulating or mechanical properties. In Figs. 21-23, alternative embodiments of a heat insulating assemblies comprising a top annular half-covering 190' and a bottom 192' is shown which top and bottom half-coverings are joined along surfaces of contact designated the reference numerals 191 and 193. In Fig. 21, the heat insulating assembly is designated the reference numeral 280 and comprises apart from the half-coverings 190' and 192' an outer foil covering 278 which may constitute an aluminum foil covering which circumferentially encirles the adjoined half-coverings 190' and 192" except for a line of separation 279 extending along the surface of contact 193.

In Fig. 22, a modified assembly 280' is shown comprising an outer fibrous covering 278' also presenting a line of separation similar to the line of separation 279 described above with reference to Fig. 21 and designated the reference numeral 279'. The fibrous covering 278' may be constituted by a textile, i.e. an organic fiber covering or alternatively and preferably a non-organic fiber covering such as a woven or non-woven plastics foil covering, e.g. a covering comprising a vlies material.

In Fig. 23, a further alternative embodiment of the heat insulating assembly comprising the top and bottom half-coverings 190' and 192' is shown provided with an outer shielding 278" constituting a continuous shielding such as a cast or cured covering, e.g. a shielding produced by means of a clay or paint based material which is allowed to solidify after the application of an outer covering preferably applied as a liquid which is sprayed onto the outer surface of the half-coverings 190' and 192' and thereupon cured or allowed to solidify before or after which curing or solidifying process a longitudinal line of separation 279" is provided. Similarly, an interior covering or shielding may be provided which covering or shielding may serve the purpose of providing a moisture transport element in accordance with the teachings described in applicant's above mentioned international patent applications, or alternatively constitute humidity or water impermeable coverings or coatings or alternatively constitute a corrosion protective coating such as a corrosion protection fluid or liquid. The above described outer coverings or shieldings may also be provided as interior coatings or shieldings.

Numerous alternative embodiments are to be considered part of the present invention as defined in the appending claims.

### EXAMPLE

In experiments carried out by the inventors, annular insulating mineral fiber coverings were produced from a basic 70 mm thick uncured, non-woven mineral fiber web of an area weight varying between 0.9 kg/m² and 1.25 kg/m². The production station shown in fig. 8 was employed for the experiments. The speed of the conveyor belts 152 and 154 were 20 m/min, and the speed of the conveyor belt 166 was 10 m/min. The speed of the ondulation generating conveyor belts 156 and 158 varied for producing the ondulations of the ondulated non-woven mineral fiber web 170.

According to the first experiment, annular insulating mineral fiber coverings of an outer diameter of 61 mm and an inner diameter of 21 mm were produced by operating the ondulation generating conveyor belts 156 and 158 at a speed of approximately 140 rpm. The ondulation generating conveyor belts 156 and 158 defined a lateral height of 50 mm and the height of the ondulated mineral fiber web 170 was 70 mm. From the conveyor belt 166, the ondulated mineral fiber web 170 was input to the curing oven 180 shown in fig. 16 generating a cured, ondulated, non-woven mineral fiber web of height of 70 mm. The below mineral fiber webs were produced:
Sample 1: Two layers of 70 mm non-compressed mineral fiber web.
Sample 2: Two layers of 70 mm compressed mineral fiber web compressed into a total height of 55 mm.
Sample 3: Two layers of 70 mm mineral fiber web compressed individually into total height of 60 mm.
Sample 4: Three layers of 70 mm mineral fiber web compressed individually into a total height of 80 mm.
Sample 5: Three layers of 70 mm compressed mineral fiber web compressed into a total height of 80 mm.

After the curing in the curing oven 180, the ondulation peaks of the cured ondulated mineral fiber web 170 were separated into individual half-shells as illustrated in fig. 16 and the half-shells were further machined exteriorly and interiorly for producing annular insulating half-coverings exhibiting circular cylindrical outer and inner surfaces. For producing the 61 mm outer diameter and 21 mm inner diameter of the annular insulating coverings, a certain amount of the cured mineral fiber material had to be removed. The removed material was considered waste and the waste amounted to approx. 30% of all the above samples. The waste basically originated from an excessive outer diameter of the half-shells and it was concluded that a modified ondulation technique or alternatively a larger outer diameter of the annular insulating covering produced from the half-shells machined after the separation of the half-shells from the cured, ondulated mineral fiber web 170 would reduce the waste to less than 10%.

According to the second experiment, annular insulating mineral fiber coverings of an outer diameter of 114 mm and an inner diameter of 34 mm were produced by operating the ondulation generating conveyor belts 156 and 158 at a speed of approximately 80 rpm. The ondulation generating conveyor belts 156 and 158 defined a lateral height of 50 mm and the height of the ondulated mineral fiber web 170 was 120 mm. From the conveyor belt 166, the ondulated mineral fiber web 170 was input to the curing oven 180 shown in fig. 16 generating a cured, ondulated, non-woven mineral fiber web of height of 120 mm. The below mineral fiber webs were produced:
Sample 6: Four layers of 70 mm individually compressed mineral fiber web.
Sample 7: Four layers of 70 mm individually compressed mineral fiber web.
Sample 8: Four layers of 70 mm individually compressed mineral fiber web.
Sample 9: Four layers of 70 mm individually compressed mineral fiber web.
Sample 10: Four layers of 70 mm individually compressed mineral fiber web.
Sample 11: Five layers of 70 mm individually compressed mineral fiber web.

After the curing in the curing oven 180, the ondulation peaks of the cured ondulated mineral fiber web 170 were separated into individual half-shells as illustrated in fig. 16 and the half-shells were further machined exteriorly and interiorly for producing annular insulating half-coverings exhibiting circular cylindrical outer and inner surfaces. For producing the 114 mm outer diameter and 34 mm inner diameter of the annular insulating coverings, a certain amount of the cured mineral fiber material had to be removed. The removed material was considered waste and the waste amounted to approx. 20% of all the above samples. The waste basically originated from an excessive outer diameter of the half-shells and it was concluded that a modified ondulation technique or alternatively a larger outer diameter of the half-shells machined after the separation of the half-shell from the cured, ondulated mineral fiber web 170 would reduce the waste to less than 10% or even less than 5%.

It is contemplated that annular insulating mineral fiber coverings may be produced in accordance with the above described technique exhibiting insulating properties corresponding to the insulating properties of the mineral fiber insulating web from which the annular insulating mineral fiber coverings are produced. It is contemplated that annular insulating mineral fiber coverings of a density of 15-200 kg/m³, preferably 70-90 kg/m³ and containing rockwool fibers, and of a density of 40-60 kg/m³ and containing glass wool fibers, may be produced from primary mineral fiber webs of area weights varying between 500 g/m² and 10000 g/m² and further processed through folding and/or compression techniques producing a single mineral fiber web from which the annular coverings are produced or from two or more and even up to 40 individual layers. It is further contemplated that the annular insulating coverings may be produced having outer diameters varying between 60 and 300 mm and inner diameters varying between 10 and 60 mm. Annular insulating coverings may be produced in accordance with any mineral fiber production technique well known in the art per se and in particular in accordance with the techniques described in the above identified published international patent application and also applicant's published patent application No. PCT/DK94/00406, publication No. WO95/14135 and in any arbitrary length determined by the overall width of the production plant such as the width of the ondulation generating conveyor belts 156 and 158 and the width of the curing oven. The experiments reveal that the annular insulating coverings of a length up to 1.8 - 2.4 m may be produced in accordance with the above described continuous online production technique and that the waste generated through machining the outer and/or inner surfaces of the annular insulating coverings may be reduced to less than 10% or even more or even totally eliminated, provided the outer and inner surface contours of the ondulations are properly configurated in conformity with the intentional outer and inner surfaces of the final product, i.e. the annular insulating mineral fiber covering.

## Claims

1. A method of producing an annular insulating mineral fiber covering, comprising the following steps:
a) producing a first non-woven mineral fiber web (150) defining a longitudinal and a transversal direction parallel with said first non-woven mineral fiber web (150) and containing an uncured, yet curable bonding agent,
b) moving said first non-woven mineral fiber web (150)in said longitudinal direction,
c) folding said first non-woven mineral fiber web transversely relative to said longitudinal direction and parallel with said transversal direction by decelerating an outer top surface of the first non-woven mineral fiber web (150) relative to an outer lower surface of said first non-woven mineral fiber web (150) thereby generating an upwardly sloping ondulation and thereupon accelerating said outer top surface and decelerating said outer lower surface causing a downwardly sloping ondulation so as to produce an unsupported second non-woven mineral fiber web (170) comprising ondulations including two sets of ondulation peaks extending in opposite directions relative to one another and relative to a plane of separation parallel with said longitudinal and transversal directions, said step c) including a step of curing of the outer surface or the outer surfaces of said second non-woven mineral fiber web by exposing the outer surface or the outer surfaces of said second non-woven mineral fiber web to hot air jets or hot air streams,
d) separating said two sets of ondulation peaks from one another along said plane of separation so as to produce two sets of curved half-coverings (190', 192'),
e) composing two half-coverings of said two sets of curved half-coverings (190', 192') into said annular insulating mineral fiber covering, and
f) curing said second non-woven mineral fiber web prior to separating said two sets of ondulation peaks from one another and from said second non-woven mineral fiber web in step d), curing said two sets of curved half-coverings produced in step d) prior to composing said two half-coverings of said two sets of curved half-coverings into said annular insulating mineral fiber covering in step e) or curing said annular insulating mineral fiber covering produced in step e).

2. The method according to claim 1, **characterized in** said folding in step c) of said first non-woven mineral fiber web (150) being performed so as to produce said two sets of ondulation peaks of said second non-woven mineral fiber web (170) defining outer curved surfaces of specific configurations.

3. The method according to claim 2, **characterized in** said specific configurations of said outer curved surfaces of said two sets of ondulation peaks constituting segments of circular cylindrical surfaces.

4. The method according to any of the claims 1-3, **characterized in** said folding in step c) of said first non-woven mineral fiber web (150) being performed so as to produce said two sets of ondulation peaks of said second non-woven mineral fiber web (170) defining inner curved surfaces (272) of specific configurations.

5. The method according to claim 4, **characterized in** said specific configurations of said inner curved surfaces (272) of said two sets of ondulation peaks constituting segments of circular cylindrical surfaces.

6. The method according to any of the claims 1-5, **characterized in** further comprising the intermediate step prior to step e) of machining said half-coverings produced in step d) for producing half-coverings (190', 192') having an outer surface (270) of a specific surface configuration, preferably a circular cylindrical surface.

7. The method according to any of the claims 1-5, **characterized in** further comprising the intermediate step prior to step e) of machining said half-coverings (190', 192') produced in step d) for producing said half-coverings (190', 192') having an inner surface (272) of a specific surface configuration, preferably a circular cylindrical surface.

8. The method according to any of the claims 1-5, **characterized in** further comprising the intermidiate step prior to step e) of machining said half-coverings (190', 192') produced in step d) having an inner surface having axially extending slits extending into the material of said half-coverings (190', 192').

9. The method according to any of the claims 1-8, **characterized in** said first non-woven mineral fiber web (150) produced in step a) being produced containing mineral fibers predominantly arranged generally in said longitudinal direction.

10. The method according to any of the claims 1-8, **characterized in** said first non-woven mineral fiber web (150) produced in step a) being produced containing mineral fibers predominantly arranged generally in said transversal direction.

11. The method according to claim 10, **characterized in** said first non-woven mineral fiber web being produced from a basic, non-woven mineral fiber web (150) containing mineral fibers arranged generally in said longitudinal direction by arranging said basic non-woven mineral fiber web in overlapping layers.

12. The method according to claim 11, **characterized in** said basic non-woven mineral fiber web being arranged in overlapping relation generally in said transversal direction.

13. The method according to any of the claims 1-8, **characterized in** said first non-woven mineral fiber web (150) being produced containing mineral fibers predominantly arranged generally transversely relative to one another and generally transversely relative to said longitudinal direction and said transversal direction.

14. The method according to claim 13, **characterized in** said first non-woven mineral fiber web (150) being produced from a basic, non-woven mineral fiber web containing mineral fibers predominantly arranged generally in said longitudinal direction by arranging segments of said basic, non-woven mineral fiber web in partly mutually overlapping relationship and transversely relative to said longitudinal direction and said transversal direction so as to produce a segmented non-woven mineral fiber web containing mineral fibers predominantly arranged generally transversely relative to said longitudinal direction and said transversal direction and generally transversely relative to one another, and folding said segmented, non-woven mineral fiber web transversely relative to said longitudinal direction and parallel with said transversal direction so as to produce said non-woven mineral fiber web containing mineral fibers predominantly arranged generally transversely relative to one another and generally transversely relative to said longitudinal direction and said transversal direction.

15. The method according to any of the claims 1-8, said first non-woven mineral fiber web (150) being composed of a number of individual non-woven mineral fiber webs arranged in a multilayer configuration.

16. The method according to claim 15, said individual non-woven mineral fiber webs being of identical structure or different structures and/or said individual non-woven mineral fiber webs being of identical density or different densities.

17. The method according to claim 16, each of said individual non-woven mineral fiber webs being produced in accordance with the method as defined in any of the claims 9-14.

18. The method according to any of the claims 1-17, further comprising the additional step of height compressing said first non-woven mineral fiber web produced in step a).

19. The method according to any of the claims 1-18, further comprising the additional step of longitudinally compressing said first non-woven mineral fiber web produced in step a).

20. The method according to any of the claims 1-19, **characterized in** further comprising the additional step of transversely compressing said non-woven mineral fiber web produced in step a).

21. The method according to any of the claims 1-20, **characterized in** further comprising the additional step of transversely compressing a rim part of said first non-woven mineral fiber web produced in step a).

22. The method according to any of the claims 1-21, **characterized in** further comprising the intermediate step of applying a surface coating on one or both sides of said first non-woven mineral fiber web produced in step a) prior to folding said first non-woven mineral fiber web in step c).

23. The method according to claim 20, **characterized in** said coating being constituting by a foil or covering such as a vlies covering or an aluminum foil.

24. The method according to any of the claims 1-23, **characterized in** further comprising the step of applying an exterior coating to said annular insulating mineral fiber covering.

25. The method according to claim 24, **characterized in** said coating being constituted by a plastics foil, such as a continuous foil or a plastics fiber containing foil, e.g. a vlies foil, a metal coating such as an aluminum foil, a paint coating or a combination thereof.

## Patentansprüche

1. Verfahren zum Herstellen einer ringförmigen Isolationsverkleidung aus Mineralfasern, enthaltend die folgenden Schritte:
(a) Erzeugen einer ersten Mineralfaservliesbahn (150), die eine Längs- und eine Querrichtung parallel zu der ersten Mineralfaservliesbahn (150) definiert und ein ungehärtetes, dennoch härtbares Bindemittel enthält,
(b) Bewegen der ersten Mineralfaservliesbahn (150) in der Längsrichtung,
(c) Falten der ersten Mineralfaservliesbahn quer zu der Längsrichtung und parallel zu der Querrichtung durch Verzögern einer äußeren Oberseite der ersten Mineralfaservliesbahn (150) relativ zu einer äußeren Unterseite der ersten Mineralfaservliesbahn (150), um dadurch eine ansteigende Welle zu erzeugen, und darauf Beschleunigen der äußeren Oberseite und Verzögern der äußeren Unterseite, um dadurch eine abfallende Welle zu verursachen, um so eine nicht unterstützte zweite Mineralfaservliesbahn (170) zu erzeugen, die Wellen enthält, welche zwei Sätze Wellenspitzen einschliessen, die in entgegengesetzte Richtungen relativ zueinander und relativ zu einer Abtrennebene parallel zu der Längs- und der Querrichtung verlaufen, wobei Schritt c) den Schritt des Härtens der Außenfläche oder der Außenflächen der zweiten Mineralfaservliesbahn dadurch einschließt, dass die Außenfläche oder die Außenflächen der zweiten Mineralfaservliesbahn Heißluftstrahlen oder Heißluftströmen ausgesetzt sind,
(d) Abtrennen der beiden Sätze Wellenspitzen voneinander entlang der Abtrennebene, um zwei Sätze gebogener Halbverkleidungen (190', 192') zu erzeugen,
(e) Zusammensetzen von zwei Halbverkleidungen der beiden Sätze gebogener Halbverkleidungen (192', 192') zu der ringförmigen Isolationsverkleidung aus Mineralfasern und
(f) Härten der zweiten Mineralfaservliesbahn vor Abtrennen der beiden Sätze Wellenspitzen voneinander und von der zweiten Mineralfaservliesbahn in Schritt d), Härten der beiden in Schritt d) hergestellten Sätze gebogener Halbverkleidungen vor dem Zusammensetzen der beiden Halbverkleidungen der beiden Sätze gebogener Halbverkleidungen zu der ringförmigen Isolationsverkleidung aus Mineralfasern in Schritt e) oder Härten der in Schritt e) hergestellten ringförmigen Isolationsverkleidung aus Mineralfasern.

2. Verfahren nach Anspruch 1, **dadurch gekennzeichnet, dass** das Falten in Schritt c) der ersten Mineralfaservliesbahn (150) so durchgeführt wird, dass die beiden Sätze Wellenspitzen der zweiten Mineralfaservliesbahn (170) erzeugt werden, die äußere gekrümmte Flächen mit spezifischen Konfigurationen definieren.

3. Verfahren nach Anspruch 2, **dadurch gekennzeichnet, dass** die spezifischen Konfigurationen der äußeren gekrümmten Flächen der beiden Sätze Wellenspitzen Segmente mit kreisförmigen, zylindrischen Oberflächen bilden.

4. Verfahren nach einem der Ansprüche 1-3, **dadurch gekennzeichnet, dass** das Falten in Schritt c) der ersten Mineralfaservliesbahn (150) so durchgeführt wird, dass die beiden Sätze Wellenspitzen der zweiten Mineralfaservliesbahn (170) erzeugt werden, die innere (272) gekrümmte Flächen mit spezifischen Konfigurationen definieren.

5. Verfahren nach Anspruch 4, **dadurch gekennzeichnet, dass** die spezifischen Konfigurationen der inneren gekrümmten Flächen (272) der beiden Sätze Wellenspitzen Segmente mit kreisförmigen, zylindrischen Oberflächen bilden.

6. Verfahren nach einem der Ansprüche 1-5, **dadurch gekennzeichnet, dass** es ferner den intermediären Schritt vor Schritt e) des maschinell Bearbeitens der in Schritt d) hergestellten Halbverkleidungen enthält, um Halbverkleidungen (190, 192') herzustellen, die eine Außenfläche (270) mit einer spezifischen Oberflächenkonfiguration, vorzugsweise einer kreisförmigen, zylindrischen Oberfläche besitzen.

7. Verfahren nach einem der Ansprüche 1-5, **dadurch gekennzeichnet, dass** es ferner den intermediären Schritt vor Schritt e) des maschinell Bearbeitens der in Schritt d) hergestellten Halbverkleidungen (190', 192') enthält, um die Halbverkleidungen (190, 192') herzustellen, die eine Innenfläche (272) mit einer spezifischen Oberflächenkonfiguration, vorzugsweise einer kreisförmigen, zylindrischen Oberfläche besitzen.

8. Verfahren nach einem der Ansprüche 1-5, **dadurch gekennzeichnet, dass** es ferner den intermediären Schritt vor Schritt e) des maschinell Bearbeitens der in Schritt d) hergestellten Halbverkleidungen (190', 192') enthält, die eine Innenfläche mit axial verlaufenden Schlitzen besitzen, die in das Material der Halbverkleidungen (190', 192') verlaufen.

9. Verfahren nach einem der Ansprüche 1-8, **dadurch gekennzeichnet, dass** die in Schritt a) hergestellte erste Mineralfaservliesbahn (150) erzeugt wird, die vorherrschend allgemein in der Längsrichtung angeordnete Mineralfasern enthält.

10. Verfahren nach einem der Ansprüche 1-8, **dadurch gekennzeichnet, dass** die in Schritt a) hergestellte erste Mineralfaservliesbahn (150) erzeugt wird, die vorherrschend allgemein in der Querrichtung angeordnete Mineralfasern enthält.

11. Verfahren nach Anspruch 10, **dadurch gekennzeichnet, dass** die erste Mineralfaservliesbahn aus einer zugrundeliegenden Mineralfaservliesbahn (150) erzeugt wird, die durch Anordnen der zugrundeliegenden Mineralfaservliesbahn in überlappenden Schichten allgemein in der Längsrichtung angeordnete Mineralfasern enthält.

12. Verfahren nach Anspruch 11, **dadurch gekennzeichnet, dass** die zugrundeliegende Mineralfaservliesbahn in überlappender Weise allgemein in der Querrichtung angeordnet ist.

13. Verfahren nach einem der Ansprüche 1-8, **dadurch gekennzeichnet, dass** die erste Mineralfaservliesbahn (150) erzeugt wird, die vorherrschend allgemein quer zueinander und allgemein quer zu der Längsrichtung und der Querrichtung angeordnete Mineralfasern enthält.

14. Verfahren nach Anspruch 13, **dadurch gekennzeichnet, dass** die erste Mineralfaservliesbahn (150) aus einer zugrundeliegenden Mineralfaservliesbahn erzeugt wird, die durch Anordnen von Segmenten der zugrundeliegenden Mineralfaservliesbahn in teilweise gegenseitig überlappender Weise und quer zu der Längsrichtung und der Querrichtung vorherrschend allgemein in der Längsrichtung angeordnete Mineralfasern enthält, um so eine segmentierte Mineralfaservliesbahn zu erzeugen, die vorherrschend allgemein quer zu der Längsrichtung und der Querrichtung und allgemein quer zueinander angeordnete Mineralfasern enthält, und Falten der segmentierten Mineralfaservliesbahn quer zu der Längsrichtung und parallel zu der Querrichtung, um so die Mineralfaservliesbahn zu erzeugen, die vorherrschend allgemein quer zueinander und allgemein quer zu der Längsrichtung und der Querrichtung angeordnete Mineralfasern enthält.

15. Verfahren nach einem der Ansprüche 1-8, wobei die erste Mineralfaservliesbahn (150) aus einer Anzahl individueller Mineralfaservliesbahnen zusammengesetzt ist, die in einer mehrlagigen Konfiguration angeordnet sind.

16. Verfahren nach Anspruch 15, wobei die individuellen Mineralfaservliesbahnen identische Strukturen oder verschiedene Strukturen aufweisen, und/oder die individuellen Mineralfaservliesbahnen identische Dichten oder verschiedene Dichten aufweisen.

17. Verfahren nach Anspruch 16, wobei jede der individuellen Mineralfaservliesbahnen in Übereinstimmung mit dem Verfahren gemäß einem der Ansprüche 9-14 hergestellt wird.

18. Verfahren nach einem der Ansprüche 1-17, wobei es ferner den zusätzlichen Schritt der Höhenkomprimierung der in Schritt a) hergestellten ersten Mineralfaservliesbahn enthält.

19. Verfahren nach einem der Ansprüche 1-18, wobei es ferner den zusätzlichen Schritt der Längskomprimierung der in Schritt a) hergestellten ersten Mineralfaservliesbahn enthält.

20. Verfahren nach einem der Ansprüche 1-19, **dadurch gekennzeichnet, dass** es ferner den zusätzlichen Schritt der Querkomprimierung der in Schritt a) hergestellten Mineralfaservliesbahn enthält.

21. Verfahren nach einem der Ansprüche 1-20, **dadurch gekennzeichnet, dass** es ferner den zusätzlichen Schritt der Querkomprimierung eines Randteils der in Schritt a) hergestellten ersten Mineralfaservliesbahn enthält.

22. Verfahren nach einem der Ansprüche 1-21, **dadurch gekennzeichnet, dass** es ferner den intermediären Schritt des Aufbringens einer Beschichtung auf eine oder beide Seiten der in Schritt a) hergestellten ersten Mineralfaservliesbahn vor dem Falten der ersten Mineralfaservliesbahn in Schritt c) enthält.

23. Verfahren nach Anspruch 20, **dadurch gekennzeichnet, dass** die Beschichtung aus einer Folie oder einer Abdeckung, wie zum Beispiel einer Vliesabdeckung oder einer Aluminiumfolie gebildet ist.

24. Verfahren nach einem der Ansprüche 1-23, **dadurch gekennzeichnet, dass** es ferner den Schritt des Aufbringens einer äußeren Beschichtung auf die ringförmige Isolationsverkleidung aus Mineralfasern enthält.

25. Verfahren nach Anspruch 24, **dadurch gekennzeichnet, dass** die Beschichtung aus einer Kunststofffolie, wie zum Beispiel einer kontinuierlichen Folie oder einer Kunststofffasern enthaltenden Folie, beispielsweise einer Vliesfolie, einem Metallüberzug, wie zum Beispeil einer Aluminiumfolie, einem Anstrich oder einer Kombination daraus gebildet ist.

## Revendications

1. Procédé de production d'une couverture annulaire en fibre minérale isolante comprenant les étapes suivantes:
a) la production d'une première bande en fibres minérales non tissées (150) définnisant une direction longitudinale et une direction transversale parallèles à ladite première bande en fibres minérales non tissées (150) et contenant un agent de liaison non-durci, mais durcissable,
b) le déplacement de ladite première bande en fibres minérales non tissées (150) dans ladite direction longitudinale,
c) le pliage de ladite première bande en fibres minérales non tissées transversalement relative à ladite direction longitudinale et parallèlement à ladite direction transversale en décélérant une face supérieure extérieure de la première bande en fibres minérales non tissées (150) relative à une face inférieure extérieure de ladite première bande en fibres minérales non tissées (150), produisant ainsi une ondulation en pente montante et ensuite accelerant ladite face supérieure extérieure et décélérant ladite face inférieure extérieure résultant en une ondulation en pente descendante afin de produire une deuxième bande en fibres minérales non tissées et non-soutenue (170) comprenant des ondulations comportant deux parties de sommets d'ondulation s'étendant dans des directions opposées l'une par rapport à l'autre et relative à un plan de séparation parallèlement auxdites directions longitudinales et transversales, ladite étape c) comportant une étape de durcissement de ladite face extérieure ou lesdites faces extérieures de ladite deuxième bande en fibres minérales non tissées en exposant la face extérieure ou les faces extérieures de ladite deuxième bande en fibres minérales non tissées à des jets d'air chauds ou à des courant d'aérage chauds,
d) la séparation des deux parties de sommets d'ondulation l'une de l'autre lelong dudit plan de séparation de manière à produire deux parties de demi-couvertures courbées (190', 192'),
e) la composition de deux demi-couvertures desdites deux parties de demi-couvertures courbées (190', 192') dans ladite couverture annulaire en fibre minérale isolante, et
f) le durcissement de ladite première bande en fibres minérales non tissées préalablement à la séparation desdites deux parties de sommets d'ondulation l'une de l'autre et de ladite deuxième bande en fibres minérales non tissées lors de l'étape d), durcissant lesdites deux parties de demi-couvertures courbées produites lors de l'étape d) préalablement à la composition desdites deux demi-couvertures desdites deux parties de demi-couvertures courbées à l'intérieur de ladite couverture annulaire en fibre minérale isolante lors de l'étape e) ou durcissant ladite couverture annulaire en fibre minérale isolante produite lors de l'étape e).

2. Procédé selon la revendication 1, **caractérisé en ce que** ledit pliage de l'étape c) de ladite première bande en fibres minérales non tissées (150) étant effectué de manière à produire lesdites deux parties de sommets d'ondulation de ladite deuxième bande en fibres minérales non tissées (170) définissant des faces courbées extérieures de configurations spécifiques.

3. Procédé selon la revendication 2, **caractérisé en ce que** lesdites configurations spécifiques desdites faces courbées extérieures desdites deux parties de sommets d'ondulation constituant des segments de faces circulaires cylindriques.

4. Procédé selon l'une quelconque des revendications 1 à 3, **caractérisé en ce que** ledit pliage de l'étape c) de ladite première bande en fibres minérales non tissées (150) étant effectué de manière à produire lesdites deux parties de sommets d'ondulation de ladite deuxième bande en fibres minérales non tissées (170) définissant des faces courbées intérieures (272) de configurations spécifiques.

5. Procédé selon la revendication 4, **caractérisé en ce que** lesdites configurations spécifiques desdites faces courbées intérieures (272) desdites deux parties de sommets d'ondulation constituant des segments de faces circulaires cylindriques.

6. Procédé selon l'une quleconque des revendications 1 à 5, **caractérisé en ce que** le procédé comprenant en outre l'étape intermédiaire préalable à l'étape e) d'usiner lesdites demi-couvertures produites lors de l'étape d) pour produire des demi-couvertures (190', 192') ayant une face extérieure (270) d'une configuration de face spécifique, préférablement une face circulaire cylindrique.

7. Procédé selon l'une quelconque des revendications 1 à 5, **caractérisé en ce que** le procédé comprenant en outre l'étape intermédiaire préalable à l'étape e) d'usiner lesdites demi-couvertures (190', 192') produites lors de l'étape d) afin de produire lesdites demi-couvertures (190', 192') ayant une face intérieure (272) d'une configuration de face spécifique, préférablement une face circulaire cylindrique.

8. Procédé selon l'une quelconque des revendications 1 à 5, **caractérisé en ce que** le procédé comprenant en outre l'étape intermédiaire préalable à l'étape e) d'usinage desdites demi-couvertures (190', 192') produites lors de l'étape d) ayant une face intérieure ayant des fentes s'étendant de manière axialle s'étendant à l'intérieur du matériau desdites demi-couvertures (190', 192').

9. Procédé selon l'une quelconque des revendications 1 à 8, **caractérisé en ce que** ladite première bande en fibres minérales non tissées (150) produite lors de l'étape a) étant fabriquée en contenant des fibres minérales disposées essentiellement, sensiblement, dans ladite direction longitudinale.

10. Procédé selon l'une quelconque des revendications 1 à 8, **caractérisé en ce que** ladite première bande en fibres minérales non tissées (150) produite lors de l'étape a) étant fabriquée en contenant des fibres minérales disposées essentiellement, sensiblement, dans ladite direction transversale.

11. Procédé selon la revendication 10, **caractérisé en ce que** ladite première bande en fibres minérales non tissées étant fabriquée à partir d'une bande en fibres minérales non tissées (150) de base contenant des fibres minérales sensiblement disposées dans ladite direction longitudinale en disposant ladite bande en fibres minérales non tissées de base en des couches qui se recouvrent.

12. Procédé selon la revendication 11, **caractérisé en ce que** ladite bande en fibres minérales non tissées de base étant disposé dans une relation de recouvrement, sensiblement dans ladite direction transversale.

13. Procédé selon l'une quelconque des revendications 1 à 8, **caractérisé en ce que** ladite première bande en fibres minérales non tissées (150) étant produite en contenant des fibres minérales disposées essentiellement de manière transversale sensiblement les unes par rapport aux autres et sensiblement de manière transversale par rapport à ladite direction longitudinale et ladite direction transversale.

14. Procédé selon la revendication 13, **caractérisé en ce que** ladite première bande en fibres minérales non tissées (150) étant fabriquée à partir d'une bande en fibres minérales non tissées de base contenant des fibres minérales disposées essentiellement dans ladite direction longitudinale sensiblement, en disposant des segments de ladite bande en fibres minérales non tissées de base dans une relation de recouvrement mutuelle partielle et de manière transversal par rapport à ladite direction longitudinale et ladite direction transversale afin de produire une bande segmentée en fibres minérales non tissées contenant des fibres minérales disposées essentiellement de manière transversale sensiblement, par rapport à ladite direction longitudinale et ladite direction transversale et sensiblement de manière transversale relatif l'une par rapport à l'autre, et pliant ladite bande segmentée en fibres minérales non tissées de manière transversale par rapport à ladite direction longitudinale et parallèlement à ladite direction transversale afin de produire ladite bande segmentée en fibres minérales non tissées contenant des fibres minérales disposées essentiellement de manière transversale sensiblement, relatif l'une à l'autre et sensiblement de manière transversale par rapport à ladite direction longitudinale et ladite direction transversale.

15. Procédé selon l'une quelconque des revendications 1 à 8, ladite première bande en fibres minérales non tissées (150) étant composé d'un nombre de bandes en fibres minérales non tissées individuelles disposées en une configuration multicouche.

16. Procédé selon la revendication 15, lesdites bandes en fibres minérales non tissées individuelles étant de structure identique ou de structures différentes et/ou lesdites bandes en fibres minérales non tissées individuelles étant de densité identique ou de densités différentes.

17. Procédé selon la revendication 16, chacune desdites bandes en fibres minérales non tissées individuelles étant produite en conformité avec le procédé comme définé dans l'une quelconque des revendications 9 à 14.

18. Procédé selon l'une quelconque des revendications 1 à 17, comprenant en outre l'étape supplémentaire de compression en hauteur de ladite première bande en fibres minérales non tissées fabriquée dans l'étape a).

19. Procédé selon l'une quelconque des revendications 1 à 18, comprenant en outre l'étape supplémentaire de compression longitudinale de ladite première bande en fibres minérales non tissées fabriquée dans l'étape a).

20. Procédé selon l'une quelconque des revendications 1 à 19, **caractérisé en ce que** le procédé comprend en outre l'étape supplémentaire de comprimer de manière transversale ladite bande en fibres minérales non tissées fabriquée dans l'étape a).

21. Procédé selon l'une quelconque des revendications 1 à 20, **caractérisé en ce que** le procédé comprend en outre l'étape supplémentaire de comprimer de manière transversale une partie du rebord de ladite première bande en fibres minérales non tissées fabriquée dans l'étape a).

22. Procédé selon l'une quelconque des revendications 1 à 21, **caractérisé en ce que** le procédé comprend en outre l'étape intermédiaire d'appliquer un revêtement de face sur l'une des deux côtés ou sur les deux côtés de ladite première bande en fibres minérales non tissées fabriquée dans l'étape a) préalablement au pliage de ladite première bande en fibres minérales non tissées de l'étape c).

23. Procédé selon la revendication 20, **caractérisé en ce que** ledit revêtement étant constitué par une feuille ou une couverture telle que du vlies ou une feuille en aluminium.

24. Procédé selon l'une quelconque des revendications 1 à 23, **caractérisé en ce que** le procédé comprend en outre l'étape de l'application d'un revêtement extérieur à ladite couverture annulaire en fibre minérale isolante.

25. Procédé selon la revendication 24, **caractérisé en ce que** ledit revêtement étant constitué par une feuille plastique, tel que une feuille continue ou une feuille contenant des fibres plastiques, par exemple une feuille en vlies, un revêtement de métal tel qu'une feuille en aluminium, un revêtement peint ou une combination de ceux-ci.
